(19) Europäisches Patentamt
European Patent Office
Office européen des brevets

(11) Veröffentlichungsnummer: **0 644 445 A2**

(12) # EUROPÄISCHE PATENTANMELDUNG

(21) Anmeldenummer: **94114225.9**

(22) Anmeldetag: **09.09.94**

(51) Int. Cl.[6]: **G02B 13/18**, G02B 13/14, G02B 9/16, G02B 9/18

(30) Priorität: **17.09.93 DE 4331735**

(43) Veröffentlichungstag der Anmeldung: **22.03.95 Patentblatt 95/12**

(84) Benannte Vertragsstaaten: **DE FR GB IT**

(71) Anmelder: **STEINHEIL OPTRONIK GmbH**
**Osterfeldstrasse 82**
**D-85736 Ismaning (DE)**

(72) Erfinder: **Erdmann, Matthias**
**Gabelsbergerstrasse 68**
**D-80333 München (DE)**

(74) Vertreter: **Prüfer, Lutz H. et al**
**PRÜFER & PARTNER,**
**Patentanwälte,**
**Harthauser Strasse 25d**
**D-81545 München (DE)**

(54) **Asphärisches Objektiv.**

(57) Die Erfindung bezieht sich auf ein dioptrisches Objektiv mit einer Mehrzahl von Linsen. Das Objektiv weist eine Hinterblende (17) auf, die als Austrittspupille (Asperturblende) wirkt. Das Objektiv ist besonders dadurch ausgezeichnet, daß die objektseitige Fläche der objektseitigen Linse eine asphärische Komponente enthält. Zusätzlich sind eine mittlere und die bildseitige Linsen eng zusammengerückt. Damit ist es möglich, Baulängen in der Größenordnung der Brennweite zu erreichen.

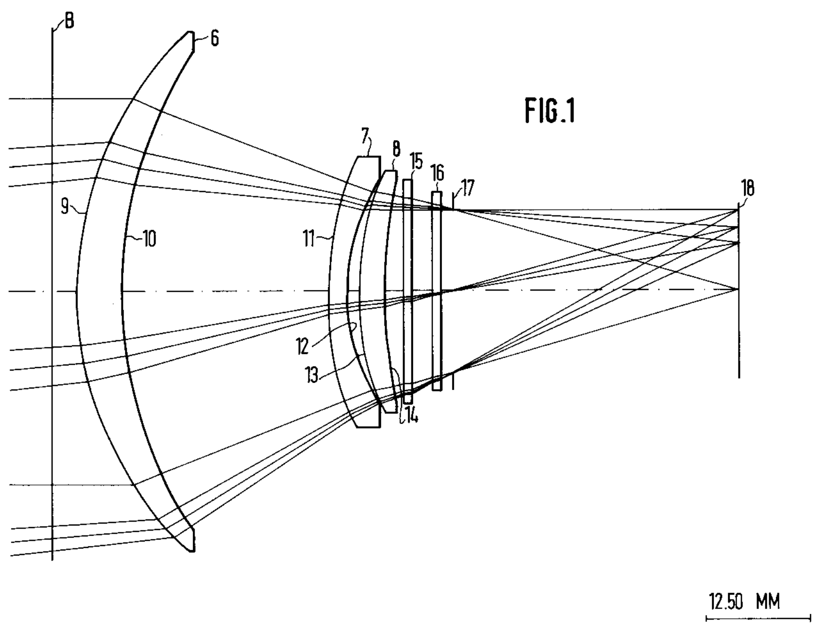


EP 0 644 445 A2

Vorliegende Erfindung bezieht sich auf ein Objektiv nach dem Oberbegriff des Patentanspruches 1.

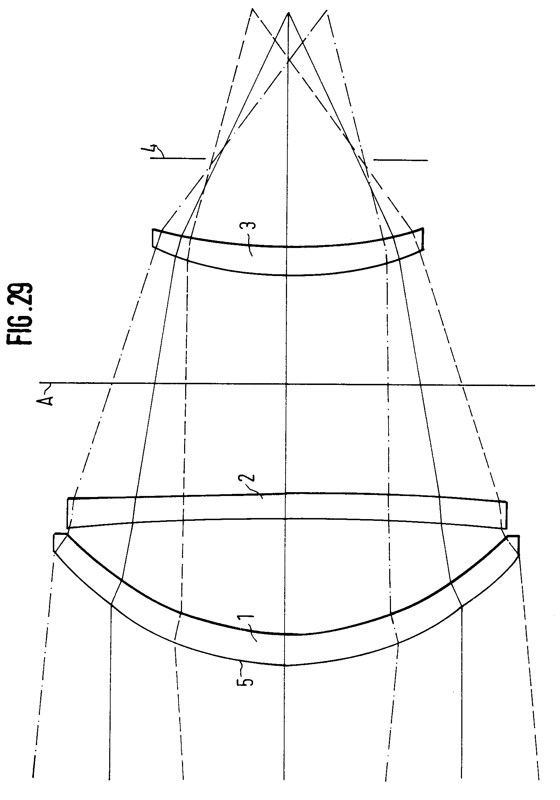

Ein derartiges Objektiv, bei dem die drei Linsengruppen aus jeweils einer Linse gebildet sind, ist aus der DE 42 34 721 A1 bekannt. Das bekannte Objektiv ist in Fig. 29 gezeigt. Wie aus Fig. 29 ersichtlich ist, weist das bekannte Objektiv eine objektseitige (vordere) Linse 1, eine mittlere Linse 2 und eine bildseitige Linse 3 auf. Hinter der bildseitigen Linse 3 ist die Hinterblende 4 vorgesehen. Die objektseitige Oberfläche 5 der Linse 1 ist asphärisch ausgestaltet. Wie aus Fig. 29 deutlich ersichtlich ist, sind die objektseitige Linse 1 und die mittlere Linse 2 nahe beieinander angeordnet, während die bildseitige Linse 3 in einem größeren Abstand zu den vorderen beiden angeordnet ist.

Das bekannte Objektiv weist den Vorteil auf, daß es wegen der Hinterblende 4, die als Aperturblende wirkt, im IR-Bereich für gekühlte, flächige Detektoren in einem Dewar mit innerem Kälteschild eingesetzt werden kann. Des weiteren hat das bekannte Objektiv eine relativ kurze Baulänge. In Fig. 29 ist die hintere Hauptebene zur Angabe der Brennweite des Objektives durch die Gerade A bezeichnet. Wie aus der Fig. 29 leicht ersichtlich ist, erstreckt sich die Baulänge fast um einen Faktor 2 der Brennweite von der Bildebene nach vorn.

Das führt zu einer noch relativ großen Baugruppe. Weiterhin sind alle drei objektseitigen Oberflächen der drei Linsen des Objektives asphärisch ausgestaltet. Das führt zu erhöhten Kosten bei der Herstellung des Objektives.

Durch die als Hinterblende ausgebildete Austrittspupille befindet sich die Eintrittspupille als virtuelles Bild der Austrittspupille in Lichtrichtung hinter dem Objektiv. Das führt zu überhöhten Linsendurchmessern, insbesondere der vorderen, weit vor der Eintrittspupille liegenden Linsen.

Aus der US-PS 2 234 707 ist ein photographisches Objektiv bekannt, das eine objektseitige Linse mit positiver Brechkraft und eine mittlere Linse mit positiver Brechkraft aufweist, wobei die objektseitige und die mittlere Linse in einer schraubbaren Fasung zusammengefaßt sind. Eine bildseitige Linse ist vorgesehen, die eine Zerstreuungslinse ist. Eine Eintrittsöffnung in die für dieses Objektiv bildet eine die Austrittspupille des Objektives darstellende Hinterblende.

Es ist Aufgabe der vorliegenden Erfindung ein Objektiv aus der DE 42 34 721 A1 bekannten Art mit vergleichsweise kleinem Durchmesser, vergleichsweise kleiner Gesamtlänge (Baulänge plus bildseitige Schnittweite) und vergleichsweise kleinen Herstellungskosten zu schaffen.

Diese Aufgabe wird gelöst durch ein Objektiv der eingangs beschrieben Art, das durch die kennzeichnenden Merkmale des Patentanspruches 1 gekennzeichnet ist. Dabei soll der Ausdruck "Linsengruppe" bedeuten, daß auch eine einzelne Linse vorhanden sein kann.

Ein derartiges Objektiv ist besonders vorteilhaft einsetzbar in dem Bereich der IR-Objektive, da die die Aperturblende darstellende Hinterblende einen ausreichenden Abstand von den Linsen hat, so daß die Hinterblende beispielsweise als inneres Kälteschild in einem Dewar-Gefäß untergebracht werden kann. Das Objektiv baut so kurz, daß der Abstand einer Brennweite von der Bildebene typischerweise noch vor dem Objektiv zu liegen kommt. Alle Objektive zu den folgenden Beispielen sind in der Bildmitte beugungsbegrenzt.

Das Objektiv kann bevorzugt Teil einer komplexeren Optik werden, wobei es in einem System von vor-, zwischen- oder nachgeschalteten Komponenten wie ein schützender Dom, Fenster, Strahlteiler, Prismen, Filter und Spiegel vorgesehen ist.

Bevorzugte Ausgestaltungen des erfindungsgemäßen Objektives ergeben sich aus den Unteransprüchen.

Es folgt die Beschreibung von Ausführungsbeispielen anhand der Figuren.

Von den Figuren zeigen:

Fig. 1 eine erste Ausführungsform des Objektives mit drei Linsen, wobei sich die bildseitigen beiden Linsen berühren;

Fig. 2 die Aberrationskurven für das in Fig. 1 gezeigte Objektiv;

Fig. 3 die Modulations-Übertragungsfunktion des in Fig. 1 gezeigten Objektives;

Fig. 4 die Bildpunktfunktion des in Fig. 1 gezeigten Objektives in Isophotendarstellung für einen Bildfeldpunkt bei (0,0; 0,0) Grad;

Fig. 5 die Bildpunktfunktion wie in Fig. 4, jedoch für einen Bildfeldpunkt bei (0,0; 3,8) Grad;

Fig. 6 die Bildpunktfunktion wie in Fig. 4, jedoch für einen Bildfeldpunkt bei (0,0; 5,1) Grad;

Fig. 7 die Bildpunktfunktion wie in Fig. 4, jedoch für einen Bildfeldpunkt bei (0,; 6,4) Grad;

Fig. 8 ein zweites Ausführungsbeispiel des Objektives mit drei Linsen, wobei die meridionalen Linien der asphärische Fläche Kegelschnitte sind;

Fig. 9 die Aberrationskurven des in Fig. 8 gezeigten Objektives;

Fig. 10 die Modulations-Übertragungsfunktion des in Fig. 8 gezeigten Objektives;

Fig. 11 die Bildpunktfunktion des in Fig. 8 gezeigten Objektives in Isophotendarstellung für einen Bildfeldpunkt bei (0,0; 0,0) Grad;

Fig. 12 die Bildpunktfunktion wie in Fig. 11, jedoch für einen Bildfeldpunkt bei (0,0; 3,8) Grad;
Fig. 13 die Bildpunktfunktion wie in Fig. 11, jedoch für einen Bildfeldpunkt bei (0,0; 5,1) Grad;
Fig. 14 die in Fig. 11 gezeigte Bildpunktfunktion, jedoch für einen Bildfeldpunkt bei (0,0; 6,4) Grad;
Fig. 15 eine dritte Ausführungsform des Objektives mit drei Linsen, wobei die bildseitige Linse im Gegensatz zu der ersten Ausführungsform aus Zinkselenid besteht;
Fig. 16 die Aberrationskurven des in Fig. 15 gezeigten Objektives;
Fig. 17 die Modulations-Übertragungsfunktion des in Fig. 15 gezeigten Objektives;
Fig. 18 die Bildpunktfunktion des in Fig. 15 gezeigten Objektives in Isophotendarstellung für einen Bildfeldpunkt bei (0,0; 0,0) Grad;
Fig. 19 die in Fig. 18 gezeigte Bildpunktfunktion, jedoch für einen Bildfeldpunkt bei (0,0; 3,8) Grad;
Fig. 20 die Bildpunktfunktion von Fig. 18, jedoch für einen Bildfeldpunkt bei (0,0; 5,1) Grad;
Fig. 21 die Bildpunktfunktion von Fig. 18, jedoch für einen Bildfeldpunkt bei (0,0; 6,4) Grad;
Fig. 22 eine vierte Ausführungsform des Objektives mit vier Linsen;
Fig. 23 die Aberrationskurven des in Fig. 22 gezeigten Objektives;
Fig. 24 die Modulations-Übertragunsfunktion des in Fig. 22 gezeigten Objektives;
Fig. 25 die Bildpunktfunktion des in Fig. 22 gezeigten Objektives in Isophotendarstellung für einen Bildfeldpunkt bei (0,0; 0,0) Grad;
Fig. 26 die Bildpunktfunktion von Fig. 25, jedoch für einen Bildfeldpunkt bei (0,0; 3,8) Grad;
Fig. 27 die Bildpunktfunktion von Fig. 25, jedoch für einen Bildfeldpunkt bei (0,0; 5,1) Grad;
Fig. 28 die Bildpunktfunktion von Fig. 27, jedoch für einen Bildfeldpunkt bei (0,0; 6,4) Grad; und
Fig. 29 ein dreilinsiges Objektiv mit Hinterblende nach dem Stand der Technik.

- Beispiel 1 -

Fig. 1 zeigt ein dreilinsiges Objektiv mit einer objektseitigen Linse 6, einer mittleren Linse 7 und einer bildseitigen Linse 8.

Die objektseitige Linse 6 besteht aus einem Material relativ geringer Dispersion, nämlich Silizium, sie weist eine positive Brechkraft auf, sie weist eine objektseitige Fläche 9 und eine bildseitige Fläche 10 auf. Die objektseitige Fläche 9 ist konvex, d.h. sie weist einen positiven Krümmungsradius auf, d.h. die objektseitige Fläche 9 ist nach vorn gewölbt. Sie ist asphärisch. Die bildseitige Fläche 10 ist konkav, d.h. sie weist ebenfalls einen positiven Krümmungsradius auf. Der Krümmungsradius der bildseitigen Fläche 10 ist größer als der Krümmungsradius der objektseitigen Fläche 9.

Die mittlere Linse 7 besteht aus einem Material, das im Vergleich zum Material der objektseitigen Linse 6 eine relativ größere Dispersion aufweist, sie besteht bei dem ersten Beispiel aus Germanium. Die mittlere Linse 7 weist eine negative Brechkraft, eine objektseitig konvexe Fläche 11 und eine bildseitig konkave Fläche 12 auf. Der Krümmungsradius der bildseitigen Fläche 12 ist kleiner als der Krümmungsradius der objektseitigen Fläche 11.

Die bildseitige Linse 8 besteht aus einem Material mit relativ geringerer Dispersion, nämlich Silizium. Die bildseitige Linse 8 weist eine positive Brechkraft, eine objektseitige, konvexe Fläche 13 und eine bildseitige, konkave Fläche 14 auf. Der Krümmungsradius der bildseitigen Fläche 14 ist größer als der Krümmungsradius der objektseitigen Fläche 13.

Eine asphärische Linse wird durch asphärische Konstanten beschrieben, wobei die asphärischen Konstanten durch folgende Gleichung definiert, die die Oberfläche der Linse beschreibt:

$$Z = \frac{ch^2}{1 + \mathrm{SQRT}\{1 - (1+k)\ c^2\ h^2\}} + Ah^4 + Bh^6 + Ch^8 + Dh^{10}$$

wobei Z die Koordinate entlang der optischen Achse,
h die Koordinate senkrecht zu der optischen Achse ist und
K der konische Koeffizient ist, der die Art des Kegelschnittes beschreibt:

| | |
|---|---|
| K = 0 | : Kugel |
| 0 > K > -1 | : Ellipsoid mit der Längsachse auf der optischen Achse |
| K = -1 | : Paraboloid |
| K < -1 | : Hyperboloid. |

Die objektseitige Fläche 9 der ersten Linse 6 bei dem ersten Beispiel weist zusätzlich folgenden asphärischen Anteil auf. Insbesondere weist sie eine Kegelschnittkomponente K von -0,083265 auf. Die Koeffizienten höherer Ordnung betragen A = 0,442096 x $10^{-7}$, B = 0,000000 x $10^{0}$, C = 0,409682 x $10^{-13}$ und D = -0,319450 x $10^{-17}$.

Wie aus Fig. 1 ersichtlich ist, berühren sich die mittlere Linse 7 und die bildseitige Linse 8, so daß bei dem in Fig. 1 gezeigten Objektiv kein Abstandsring zwischen der mittleren Linse 7 und der bildseitigen Linse 8 notwendig ist. Dagegen ist zwischen der objektseitigen Linse 6 und der mittleren Linse 7 ein Luftraum gebildet.

Wie in Fig. 1 gezeigt ist, ist bildseitig der bildseitigen Linse noch eine Germaniumscheibe 15 als Filter vorgesehen. Da die Germaniumscheibe planparallel ist, weisen ihre beiden Oberflächen unendlichen Radius auf.

Das Objektiv nach Fig. 1 ist insbesondere für den Einsatz im IR-Bereich vorgesehen. Der Empfänger zum Aufnehmen des Bildes ist daher in einem gekühlten Dewar-Gefäß angeordnet. Das Dewar-Gefäß wird eingangsseitig durch eine Saphirscheibe 16 abgeschlossen. Die Saphirscheibe 16 weist planparallele Oberflächen auf, so daß die entsprechenden Radien unendlich sind.

Filter und Fenster sind bei der optischen Korrektur berücksichtigt.

Innerhalb des gekühlten Dewar-Gefäßes ist die Hinterblende 17 des Objektives angeordnet, die als Aperturblende des Objektives dient. Die Hinterblende 17 ist in dem Dewar-Gefäß gekühlt. Da die Hinterblende 17 die Aperturblende darstellt, "sieht" der Detektor in der Bildebene nur die gekühlte Hinterblende, die als inneres Kälteschild wirkt, und die optischen Elemente. Andere Blenden und Einfassungen, die nicht gekühlt sind, werden von dem Detektor nicht gesehen.

Das Objektiv weist eine Brennweite von 86mm auf. Das Öffnungsverhältnis beträgt 1:1,8. Die Baulänge beträgt 81mm. Der Wellenlängendruchlaßbereich beträgt ca. 3 - 5µm.

In Fig. 1 ist eine Strecke B gezeigt, die die bildseitige Hauptebene anzeigt. Wie aus Fig. 1 ersichtlich ist, liegt diese Hauptebene noch vor dem Objektiv. Es handelt sich also um ein Teleobjektiv.

Die genauen Linsendaten des Objektives des Beispieles 1 ergeben sich aus der folgenden Tabelle 1:

Tabelle 1

| | Radius | Dicke bzw. Luftabstand | Material |
|---|---|---|---|
| Objekt: | unendlich | unendlich | |
| 1: | 43.387 | 5.50 | Silizium |
| 2: | 53.206 | 25.15 | |
| 3: | 38.154 | 2.40 | Germanium |
| 4: | 25.716 | 1.54 | |
| 5: | 38.206 | 3.00 | Silizium |
| 6: | 63.747 | 2.41 | |
| 7: | unendlich | 1.00 | Germanium |
| 8: | unendlich | 2.50 | |
| 9: | unendlich | 1.00 | Saphir |
| 10: | unendlich | 1.50 | |
| 11: | unendlich | 34.90 | |
| 12: | unendlich | 0.10 | Silizium |
| 13: | unendlich | 0.00 | |
| Bild | unendlich | 0.00 | |
| ASPHÄREN-KONSTANTEN:<br>K:-0.083265<br>A: 0.442096E-07 B: 0.000000E+00 C: 0.409682E-13 D: -.319450E-17 | | | |

Die Linsendaten erklären sich wie folgt. In der linken Spalte ist die jeweilige Flächen mit laufender Nummer angegeben, dabei ist in der ersten Zeile der Gegenstand/das Objekt aufgeführt. Die in der Tabelle 1 angegebenen Nummern 1 und 2 bezeichnen die erste Linse, die Nummern 3 und 4 die zweite Linse und die Nummern 5 und 6 die dritte Linse. Die Nummern 7 und 8 bezeichnen das Filter 15, die Nummern 9 und 10 das Saphirfenster 16, die Nummer 11 die Hinterblende 17 und die Nummern 12 und 13 den Detektorträger aus Silizium (nicht in der Figur gezeigt).

Die zweite Spalte in Tabelle 1 gibt den Krümmungsradius der jeweiligen Fläche an. Wenn der Radius positiv gewählt ist, dann weist die Fläche eine bildseitige Lage des Krümmungsmittelpunktes auf.

Die dritte Spalte in Tabelle 1 gibt die "Dicke" bzw. den Luftabstand an. Dabei ist jeweils der Abstand von der aufgeführten Fläche zu der nächsten Fläche angegeben.

Die vierte Spalte gibt schließlich das Material an, das jeweils bildseitig der Fläche vorhanden ist. Wenn keine Angabe vorhanden ist, ist Luft gemeint.

Schließlich ist mit "Bild" die Bildebene gemeint, diese weist in diesem Beispiel auch keine Wölbung auf, weist also einen Radius von unendlich auf.

So wie die Tabelle aufgebaut ist, sind auch die Tabellen 2 bis 4 aufgebaut.

Die Fig. 2 zeigt die üblichen Aberrationskurven für das in Fig. 1 gezeigte Objektiv. Es wird die Strahl-Queraberration in der Bildebene als Funktion der Einfallshöhe auf der Gegenstandsseite angegeben. Auf der linken Seite ist die Aberration für den Tangentialschnitt gezeigt, auf der rechten Seiten für den Sagittalschnitt. Der obere Teil gibt die Aberration für 6,4 Grad Bildfeldhöhe (relative Bildfeldhöhe 1,00) an, der zweite Teil in Fig. 2 gibt die Werte für die Bildfeldhöhe von 5,1 Grad (0,80 relative Bildfeldhöhe) an, der dritte Teil in Fig. 2 gibt die Werte für die Bildfeldhöhe von 3,83 Grad (0,60 relative Bildfeldhöhe) an und der unterste Teil gibt die Werte für die Bidlfeldhöhe von 0 Grad (auf der Achse) an. Die verschiedenen Kurven in jedem Bild zeigen die Werte für verschiedene Wellenlängen. Es sind Wellenlängen von 3,5$\mu$m, 3,7$\mu$m, 3,9$\mu$m, 4,2$\mu$m, 4,7$\mu$m und 4,9$\mu$m angegeben.

Die Figuren 9, 16 und 23 sind ganz entsprechend aufgebaut.

Im Folgenden wird anstelle des Ausdruckes "Bildfeldhöhe" auch der Ausdruck "Feldhöhe" gebraucht.

In Fig. 3 ist die Modulations-Übertragungsfunktion des in Fig. 1 gezeigten Objektives gegen die Ortsfrequenz in der Bildebene aufgetragen. Dabei sind die Werte auf der Achse, bei 3,83 Grad (0,6 relative Feldhöhe), bei 5,1 Grad (bei 0,8 relative Feldhöhe) und bei 6,4 Grad (1,0 relative Feldhöhe) angegeben. Es sind jeweils zwei Werte gegeben, der tangentiale (T) und der radiale (sagittale) (R) Schnitt. Es wurden die Wellenlängenbereiche 4,9$\mu$m mit einer Wichtung von 25, 4,7$\mu$m mit einer Wichtung von 100, 4,7$\mu$m mit einer Wichtung von 100, 3,9$\mu$m mit einer Wichtung von 100, 3,7$\mu$m mit einer Wichtung von 60 und 3,5$\mu$m mit einer Wichtung von 30 verwendet.

Die Figuren 9, 17 und 24 sind ganz entsprechend aufgebaut.

Die Figuren 4 bis 7 zeigen die Bildpunktfuntion, auch "Point-Spread-Function" genannt, als eine Darstellung der "Impulsantwort" des optischen Systemes des Beispieles 1. Es wurde hier die Isophotendarstellung gewählt, da sie sehr aussagekräftig ist. Beugungseffekte wurden mitberücksichtigt.

In Fig. 4 sind die Werte für (0,0; 0,0) Grad Feldposition angegeben. Die Wichtung bezüglich der Wellenlänge wurde wie bei Fig. 3 durchgeführt. Die Abstände der Konturen in Fig. 4 beträgt 9%. Die Mitte ist auf 1 (100%) normiert. Die Figuren 11, 18 und 25 entsprechen der Fig. 4.

Fig. 5 entspricht in ihrem Aufbau genau der Fig. 4, der Feldpunkt liegt jedoch bei (0,0; 3,8) Grad (relative Höhe 0,6). Die Figuren 12, 19 und 26 sind wie die Fig. 5 aufgebaut.

Die Fig. 6 ist wie die Fig. 4 aufgebaut. Die Feldposition beträgt jedoch (0,0; 5,1) Grad (0,8 relative Feldhöhe). Die Figuren 13, 20 und 27 sind wie die Fig. 6 aufgebaut.

Die Fig. 7 ist wie die Fig. 4 aufgebaut. Die Feldposition beträgt jedoch (0,0; 6,4) Grad (1,0 relative Feldhöhe). Die Figuren 14, 21 und 28 sind wie die Fig. 7 aufgebaut.

- Beispiel 2 -

Das in Fig. 8 gezeigte Objektiv weist eine objektseitige Linse 19, eine mittlere Linse 20 und eine bildseitige Linse 21 auf. Es ist eine Germaniumscheibe 22 als Filter, eine Saphirscheibe 23 als Eintrittsfenster für ein Dewar-Gefäß, eine Hinterblende 24 in dem Dewar-Gefäß vorgesehen. Die Bildebene ist mit 25 bezeichnet. Die objektseitige Linse 19 weist eine positive Brechkraft auf. Sie besteht aus einem Material mit relativ niedriger Dispersion, nämlich Silizium. Die objektseitige Linse 19 weist eine objektseitige, konvexe Fläche 26 und eine bildseitige, konkave Fläche 27 auf. Der Krümmungsradius der bildseitigen Fläche 27 ist größer als der Krümmungsradius der objektseitigen Fläche 26. Die objektseitige Fläche 26 weist einen asphärischen Anteil auf. Es wurde eine reine Meridianlinie mit einer Kegelschnittkonstanten von -0,083265 genommen.

Die mittlere Linse 20 besteht aus einem Material mit einer relativ größeren Dispersion, nämlich Germanium. Sie weist eine negative Brechkraft, eine objektseitige, konvexe Fläche 28 und eine bildseitige, konkave Fläche 29 auf. Der Krümmungsradius der bildseitigen Fläche 29 ist kleiner als der Krümmungsradius der objektseitigen Fläche 28.

Die bildseitige Linse 21 besteht aus einem Material mit relativ geringerer Dispersion, nämlich Silizium. Sie weist eine positive Brechkraft, eine objektseitige, konvexe Fläche 30 und eine bildseitige, konkave Fläche 31 auf. Der Krümmungsradius der bildseitigen Fläche 31 ist größer als der Krümmungsradius der objektseitigen Fläche 30.

Die mittlere Linse 20 und die bildseitige Linse 21 sind in einem kleinen Abstand voneinander angeordnet. Der Abstand ist deutlich kleiner als der Abstand der mittleren Linse von der objektseitigen Linse.

Das Objektiv weist eine Brennweite von 86mm auf. Das Öffnungsverhältnis des Objektive beträgt 1:1,8. Die Baulänge des Objektives beträgt 81mm. Der Wellenlängendurchlaßbereich beträgt ca. 3 - 5µm.

Durch die Strecke C ist wieder die bildseitige Hauptebene angegeben. Auch hier ist ersichtlich, daß die Baulänge des Objektives kleiner ist als die Brennweite.

Die gekühlte Hinterblende 24, die sich in dem Dewar-Gefäß befindet, ermöglicht es, einen besonders guten IR-Betrieb durchzuführen.

Die konkreten Linsendaten des Objektives des Beispieles 2 sind in Tabelle 2 angegeben. Wie bereits erwähnt ist, ist die Tabelle 2 ebenso wie die Tabelle 1 aufgebaut.

Tabelle 2

| | Radius | Dicke bzw. Luftabstand | Material |
|---|---|---|---|
| Objekt: | unendlich | unendlich | |
| 1: | 45.319 | 5.50 | Silizium |
| 2: | 58.156 | 22.73 | |
| 3: | 32.866 | 2.40 | Germanium |
| 4: | 24.732 | 4.08 | |
| 5: | 58.030 | 3.00 | Silizium |
| 6: | 91.603 | 2.49 | |
| 7: | unendlich | 1.00 | Germanium |
| 8: | unendlich | 2.30 | |
| 9: | unendlich | 1.00 | Saphir |
| 10: | unendlich | 1.50 | |
| 11: | unendlich | 34.90 | |
| 12: | unendlich | 0.10 | Silizium |
| 13: | unendlich | 0.00 | |
| Bild | unendlich | 0.00 | |
| ASPHÄREN-KONSTANTE:<br>K:-0.083265 | | | |

In Fig. 9 sind die Aberrationskurven für das in Fig. 8 gezeigte Objektiv angegeben. Die Fig. 9 ist, wie bereits erwähnt wurde, wie die Fig. 2 aufgebaut. Ein Vergleich der Figuren 2 und 9 zeigt, daß die Aberrationen bei dem in Fig. 8 gezeigten Objektiv etwas höher sind als bei dem in Fig. 1 gezeigten Objektiv.

Fig. 10 zeigt die Modulations-Übertragungsfunktion für das in Fig. 8 gezeigte Objektiv. Wie bereits erwähnt wurde, ist die Fig. 10 genau wie die Fig. 3 aufgebaut. Ein Vergleich der Figuren 3 und 10 zeigt, daß die Modulations-Übertragungsfunktion für beide Objektive sehr ähnlich ist.

Figuren 11 bis 14 zeigen die Point-Spread-Function des in Fig. 8 gezeigten Objektives. Die Figuren 11 bis 14 sind wie die entsprechenden Figuren 4 bis 7 aufgebaut. Ein Vergleich der Point-Spread-Functions wie sie in den Figuren 11 bis 14 angegeben sind, mit den Point-Spread-Functions, wie sie in den Figuren 4 bis 7 angegeben sind, zeigt, daß das in Fig. 8 gezeigte Objektiv eine ganz geringfügig breitere Point-Spread-Function als das in Fig. 1 gezeigte Objektiv hat.

- Beispiel 3 -

Das in Fig. 15 gezeigte Objektiv weist eine objektseitige Linse 32, eine mittlere Linse 33, eine bildseitige Linse 34 auf. Hinter der bildseitigen Linse 34 ist eine Germaniumscheibe 35 als Filter vorgesehen. Das Objektiv ist vor einem Dewar-Gefäß angeordnet, dessen Eintrittsfenster eine Saphirscheibe 36 bildet. In dem Dewar-Gefäß befindet sich die Hinterblende 37 des Objektives. Die Bildebene in dem Dewar-Gefäß ist mit 38 bezeichnet.

Die objektseitige Linse 32 weist eine positive Brechkraft und eine relativ geringe Dispersion auf, sie besteht aus Silizium. Sie weist eine objektseitige, konvexe Fläche 39 auf. Sie ist asphärisch. Die objektseitige Linse 32 weist eine bildseitige, konkave Fläche 40 auf. Der Krümmungsradius der bildseitigen Fläche 40 ist größer als der Krümmungsradius der objektseitigen Fläche 39.

Die mittlere Linse 33 weist eine negative Brechkraft und eine relativ größere Dispersion auf, sie besteht aus Germanium. Sie weist eine objektseitige, konvexe Fläche 41 und eine bildseitige, konkave Fläche 42 auf. Der Krümmungsradius der bildseitigen Fläche 42 ist kleiner als der Krümmungsradius der objektseitigen Fläche 41.

In einem kleinen Abstand von der mittleren Linse 33 ist die bildseitige Linse 34 vorgesehen. Der Abstand ist sehr viel kleiner als der Abstand der mittleren Linse 33 von der objektseitigen Linse 32. Die bildseitige Linse weist eine positive Brechkraft auf, sie besteht aus Zinkselenid. Die Dispersion von Zinkselenid ist kleiner als die von Germanium, aber größer als die von Silizium. Die Brechkraft von Zinkselenid ist kleiner als die von Germanium und Silizium. Die bildseitige Linse 34 weist eine objektseitige, konvexe Fläche 43 mit positivem Krümmungsradius und eine bildseitige, konkave Fläche 44 mit positivem Krümmungsradius auf. Der Krümmungsradius der bildseitigen Fläche 44 ist größer als der Krümmungsradius der objektseitigen Fläche 43.

Die objektseitige Fläche 39 der objektseitigen Linse 32 weist eine asphärische Komponente auf. Die Kegelschnittkonstante der asphärischen Komponente beträgt K = -0,053620; die Koeffizienten höherer Ordnung betragen A = -0,161285 x $10^{-7}$, B = -0,222806 x $10^{-12}$, C = 0,000000 x $10^{0}$ und D = 0,000000 x $10^{0}$.

Das in Fig. 15 gezeigte Objektiv weist eine Brennweite von 86mm auf. Das Öffnungsverhältnis des in Fig. 15 gezeigten Objektives beträgt 1:1,8. Durch das veränderte Material der dritten Linse ist es möglich, die Baulänge auf 79,5mm zu verkürzen. Der Wellenlängendurchlaßbereich beträgt ca. 3 - 5µm.

In Fig. 15 ist durch die Strecke D die Lage der bildseitigen Hauptebene angegeben. Die etwas verkürzte Bauform ist deutlich sichtbar.

Die eigentlichen Linsendaten des Objektives des Beispieles 3 sind in der folgenden Tabelle 3 aufgeführt.

Tabelle 3

| | Radius | Dicke bzw. Luftabstand | Material |
|---|---|---|---|
| Objekt: | unendlich | unendlich | |
| 1: | 38.595 | 6.50 | Silizium |
| 2: | 45.996 | 19.14 | |
| 3: | 32.468 | 2.40 | Germanium |
| 4: | 22.430 | 3.31 | |
| 5: | 35.465 | 4.00 | Zinkselenid |
| 6: | 87.485 | 3.10 | |
| 7: | unendlich | 1.00 | Germanium |
| 8: | unendlich | 2.50 | |
| 9: | unendlich | 1.00 | Saphir |
| 10: | unendlich | 1.50 | |
| 11: | unendlich | 34.90 | |
| 12: | unendlich | 0.10 | Silizium |
| 13: | unendlich | 0.00 | |
| Bild | unendlich | 0.00 | |
| ASPHÄREN-KONSTANTEN:<br>K:-0.053620<br>A:-.161285E-07 B:-.222806E-12 C: 0.000000E+00 D: 0.000000E+00 | | | |

Fig. 16 zeigt die Modulations-Übertragungsfunktion für das in Fig. 15 gezeigte Objektiv. Fig. 16 ist genau wie Fig. 3 für das in Fig. 1 gezeigte Objektiv aufgebaut. Ein Vergleich von Fig. 16 und Fig. 3 zeigt, daß für hohe Frequenzen die tangentiale Modulation am äußeren Feldrand bei dem in Fig. 15 gezeigten Objektiv gegenüber dem in Fig. 1 gezeigten Objektiv etwas abnimmt.

Fig. 17 zeigt die Aberrationskurven des in Fig. 15 gezeigten Objektives. Fig. 17 ist genauso aufgebaut wie Fig. 2.

Figuren 18 bis 21 zeigen die Point-Spread-Functions des in Fig. 15 gezeigten Objektives. Die Figuren 18 bis 21 sind genauso aufgebaut wie die Figuren 4 bis 7. Ein Vergleich der Figuren 4 bis 7 mit den Figuren 18 bis 21 ergibt, daß die Point-Spread-Functions der in Fig. 1 und Fig. 15 gezeigten Objektive sehr ähnlich sind.

- Beispiel 4 -

Das in Fig. 22 gezeigte Objektiv weist im Gegensatz zu den vorangehenden drei Beispielen vier Linsen in drei Linsengruppen auf.

Das in Fig. 22 gezeigte Objektiv kann als aus den vorhergehenden Objektiven hervorgehend angesehen werden, indem die mittlere Linse der vorhergehenden Objektive in zwei Linsen aufgespalten wird.

Es ist eine objektseitige Linse 45, eine erste mittlere Linse 46, eine zweite mittlere Linse 47 und eine bildseitige Linse 48 vorgesehen. Hinter dem Objektiv ist eine Germaniumscheibe 49 als Filter vorgesehen. Das in Fig. 22 gezeigte Objektiv ist vor einem Dewar-Gefäß angeordnet, dessen Eingangsfenster aus einer Saphirscheibe besteht und mit 50 bezeichnet ist. Innerhalb des gekühlten Dewar-Gefäßes ist eine Hinterblende 51 vorgesehen, die ebenfalls gekühlt ist. Das Objektiv ist so ausgelegt, daß die Hinterblende 51, wie bei den vorherigen Objektiven, als Aperturblende dient. Daher fällt keine Strahlung von warmen Bauteilen direkt auf den Detektor, der ein IR-Detektor ist. Auch dieses Objektiv ist daher für den Infrarotbereich gut einsetzbar.

Die objektseitige Linse 45 weist eine relativ geringe Dispersion auf, sie besteht aus Silizium. Sie weist eine positive Brechkraft, eine objektseitige, konvexe Fläche 52, die asphärisch ist, und eine bildseitige, konkave Fläche 53 auf, wobei der Krümmungsradius der bildseitige Fläche 53 größer als der Krümmungsradius der objektseitigen Fläche 52 ist.

Die erste mittlere Linse 46 der mittleren Linsengruppe weist eine relativ hohe Dispersion auf, sie besteht aus Germanium. Sie weist eine negative Brechkraft, eine objektseitige, konvexe Fläche 54 und eine bildseitige, konkave Fläche 55 auf, wobei der Krümmungsradius der bildseitige Fläche 55 kleiner ist als der Krümmungsradius der objektseitigen Fläche 54.

Die zweite mittlere Linse 47 der mittleren Linsengruppe weist eine relativ hohe Dispersion auf, sie besteht aus Germanium. Sie weist eine negative Brechkraft, eine objektseitige, konkave Fläche 56 und eine bildseitige, konvexe Fläche 57 auf, wobei der Krümmungsradius der objektseitigen Fläche 56 kleiner ist als der Krümmungsradius der bildseitigen Fläche 57.

Die bildseitige Linse 48 weist eine relativ geringe Dispersion auf, sie besteht aus Silizium. Sie weist eine positive Brechkraft, eine objektseitige, konvexe Fläche 58 und eine bildseitige, konkave Fläche 59 auf. Der Krümmungsradius der bildseitigen Fläche 59 ist kleiner als der Krümmungsradius der objektseitigen Fläche 58.

Durch die Strecke E ist die Lage der bildseitigen Hauptebene angegeben. Wie aus Fig. 22 ersichtlich ist, ist das Objektiv geringfügig länger als die Brennweite. Trotzdem ist das in Fig. 22 gezeigte Objektiv immer noch relativ kurz im Vergleich zu den Objektiven nach dem Stand der Technik.

Das in Fig. 22 gezeigte Objektiv weist eine Brennweite von 86mm auf. Es weist ein Öffnungsverhältnis von 1:1,4 auf. Es ist also besonders lichtstark. Die Baulänge des in Fig. 22 gezeigten Objektives beträgt 92mm. Der Wellenlängendurchlaßbereich beträgt ca. 3 - 5$\mu$m.

Die erste Linse weist eine objektseitige Fläche 52 auf, die eine asphärische Komponente enthält. Die asphärische Komponente ist rein kegelschnittartig mit der Größe K = -0,186374.

Die erste und die zweite Linse 46 und 47 der mittleren Linsengruppe berühren einander. Daher ist zwischen der ersten und der zweiten Linse der mittleren Linsengruppe kein Abstandsring notwendig. Die aus der ersten und zweiten Linse gebildete mittlere Linsengruppe weist einen kleinen Abstand zur bildseitigen Linse 48 und einen größeren Abstand zu der objektseitigen Linse 45 auf.

Die genauen Linsendaten des in Fig. 22 gezeigten Objektives des Beispieles 4sind aus der Tabelle 4 entnehmbar.

Tabelle 4

| | Radius | Dicke bzw. Luftabstand | Material |
|---|---|---|---|
| Objekt: | unendlich | unendlich | |
| 1: | 52.243 | 9.00 | Silizium |
| 2: | 80.920 | 15.30 | |
| 3: | 35.787 | 3.00 | Germanium |
| 4: | 24.861 | 11.45 | |
| 5: | -40.664 | 3.80 | Germanium |
| 6: | -50.728 | 2.56 | |
| 7: | 724.569 | 3.90 | Siilizium |
| 8: | -117.672 | 4.00 | |
| 9: | unendlich | 1.00 | Germanium |
| 10: | unendlich | 1.00 | |
| 11: | unendlich | 1.00 | Saphir |
| 12: | unendlich | 1.00 | |
| 13: | unendlich | 35.00 | |
| Bild | unendlich | 0.00 | |
| ASPHÄREN-KONSTANTE: K:-0.186374 | | | |

Die Tabelle 4 entspricht im wesentlichen der Tabelle 1. Es wird jedoch darauf hingewiesen, daß eine Linse mehr in der Tabelle 4 aufgeführt ist. Daher ist die Hinterblende 51 mit der Nummer 13 versehen.

In Fig. 23 sind die Aberrationskurven für das in Fig. 22 gezeigte Objektiv angegeben. Die Fig. 23 ist genauso wie die Fig. 2 aufgebaut. Ein Vergleich der Aberrationskurven in Fig. 2 und in Fig. 23 zeigt, daß die Aberrationen auch für ein hier in Rede stehendes höher geöffnetes Objektiv noch besser korrigiert werden können.

Fig. 24 zeigt die Modulations-Übertragungsfunktion des in Fig. 22 gezeigten Objektives. Die Fig. 24 ist genauso aufgebaut wie die Fig. 3. Ein Vergleich der MTF-Kurven in Fig. 24 mit denen in Fig. 3 zeigt, daß auch die Modulations-Übertragungsfunktion des in Fig. 22 gezeigten Objektives besser ist als die des in Fig. 1 gezeigten Objektives.

Die Figuren 25 bis 28 zeigen die Point-Spread-Functions des in Fig. 22 gezeigten Objektives. Die Figuren 25 bis 28 sind genauso aufgebaut wie die in Figuren 4 bis 7. Ein Vergleich der Point-Spread-Functions der Figuren 4 bis 7 mit denen der Figuren 25 bis 28 zeigt deutlich, daß die Point-Spread-Functions durch das in Fig. 22 gezeigte Objektiv deutlich verbessert werden können.

Zusammenfassend läßt sich daher sagen, daß das vierlinsige Objektiv - wie allerdings zu erwarten war - bessere Abbildungseigenschaften zeigt als die dreilinsigen Objektive. Das 4-linsige Objektiv ist aber vor allem wegen der größeren Öffnung besser.

**Patentansprüche**

**1.** Objektiv
- mit einer objektivseitigen Linsengruppe (6, 19, 32, 45), mit positiver Brechkraft, deren objektivseitige Fläche (9, 26, 39, 52) asphärisch geformt ist,
- mit einer mittleren Linsengruppe (7, 20, 33, 46) negativer Brechkraft,
- mit einer bildseitigen Linsengruppe (8, 21, 34, 48) positiver Brechkraft,
- und mit einer die Austrittspupille des Objektives darstellenden Hinterblende (17, 24, 37, 51), dadurch gekennzeichnet, daß
- der Abstand der objektivseitigen Linsengruppe zur nächsten Linsengruppe wesentlich größer ist als der Abstand der bildseitigen Linsengruppe zu der vorangehenden Linsengruppe.

**2.** Objektiv nach Anspruch 1,
dadurch gekennzeichnet, daß seine Baulänge kleiner oder gleich 4/3 der und bevorzugt kleiner oder gleich der Objektivbrennweite ist.

**3.** Objektiv nach Anspruch 1 oder 2,
dadurch gekennzeichnet, daß außer der objektseitigen Fläche der vordersten Linse alle Linsen alle sphärische Flächen aufweisen.

**4.** Objektiv nach Anspruch 1 oder 2,
dadurch gekennzeichnet, daß außer der objektseitigen Fläche der vordersten Linse weitere Flächen anderer Linsen asphärisch sind.

**5.** Objektiv nach einem der Ansprüche 1 bis 4,
dadurch gekennzeichnet, daß die asphärische Fläche/asphärischen Flächen eine rotationssymmetrische Form aufweisen, deren Meridianlinien durch einen Kegelschnitt gegeben sind.

**6.** Objektiv nach einem der Ansprüche 1 bis 5,
dadurch gekennzeichnet, daß lediglich drei Linsen vorgesehen sind, die jeweils objektseitig konvexe Menisken sind.

**7.** Objektiv nach einem der Ansprüche 1 bis 6,
gekennzeichnet durch drei Linsen, von denen die objektseitige, erste Linse eine relativ geringe Dispersion,
die zweite Linse eine relativ hohe Dispersion und
die bildseitige, dritte Linse eine mit der ersten Linse vergleichbare Dispersion aufweist.

**8.** Objektiv nach Anspruch 7,
dadurch gekennzeichnet, daß die erste Linse aus Silizium,
die zweite Linse aus Germanium und
die dritte Linse aus Silizium oder Zinkselenid besteht,
wobei der Durchlaßbereich von ca. 3µm bis ca. 5µm liegt.

**9.** Objektiv nach Anspruch 7,
dadurch gekennzeichnet, daß die erste Linse aus Germanium,
die zweite Linse aus Zinksulfid oder Zinkselenid und
die dritte Linse aus Germanium besteht,
wobei der Durchlaßbereich des Objektives im Wellenlängenbereich von ca. 8µm bis ca. 12µm liegt.

**10.** Objektiv nach einem der Ansprüche 1 bis 6,
gekennzeichnet durch drei Linsengruppen,
von denen die erste, objektseitige Linsengruppe eine Linse relativ geringer Dispersion,
die zweite Linsengruppe mindestens zwei Linsen jeweils relativ hoher Dispersion und
von denen die dritte, bildseitige Linsengruppe eine Linse mit relativ niedriger Dispersion aufweist.

**11.** Objektiv nach Anspruch 10,
dadurch gekennzeichnet, daß die erste objektseitige und erste mittlere Linse objektseitig konvexe Menisken sind, die zweite mittlere Linse ein bildseitig konvexer Meniskus ist und die bildseitige Linse eine bikonvexe Linse ist.

**12.** Objektiv nach Anspruch 10 oder 11,
dadurch gekennzeichnet, daß die objektseitige Linse aus Silizium, die mittleren Linsen aus Germanium und
die bildseitige Linse aus Silizium oder Zinkselenid besteht,
wobei der Durchlaßbereich des Objektives im Wellenlängenbereich von ca. 3µm bis ca. 5µm liegt.

**13.** Objektiv nach Anspruch 10 oder11,
dadurch gekennzeichnet, daß die objektseitige Linse aus Germanium, die mittleren Linsen aus Zinksulfid oder Zinkselenid und
die bildseitige Linse aus Germanium besteht,
wobei der Durchlaßbereich des Objektives im Wellenlängenbereich von ca. 8µm bis ca. 12µm liegt.

**14.** Objektiv nach Anspruch 1, gekennzeichnet durch die Linsendaten

Tabelle 1

| | Radius | Dicke bzw. Luftabstand | Material |
|---|---|---|---|
| Objekt: | unendlich | unendlich | |
| 1: | 43.387 | 5.50 | Silizium |
| 2: | 53.206 | 25.15 | |
| 3: | 38.154 | 2.40 | Germanium |
| 4: | 25.716 | 1.54 | |
| 5: | 38.206 | 3.00 | Silizium |
| 6: | 63.747 | 2.41 | |
| 7: | unendlich | 1.00 | Germanium |
| 8: | unendlich | 2.50 | |
| 9: | unendlich | 1.00 | Saphir |
| 10: | unendlich | 1.50 | |
| 11: | unendlich | 34.90 | |
| 12: | unendlich | 0.10 | Silizium |
| 13: | unendlich | 0.00 | |
| Bild | unendlich | 0.00 | |
| ASPHÄREN-KONSTANTEN:<br>K:-0.083265<br>A: 0.442096E-07 B: 0.000000E+00 C: 0.409682E-13 D: -.319450E-17 | | | |

**15.** Objektiv nach Anspruch 1, gekennzeichnet durch die Linsendaten

Tabelle 2

| | Radius | Dicke bzw. Luftabstand | Material |
|---|---|---|---|
| Objekt: | unendlich | unendlich | |
| 1: | 45.319 | 5.50 | Silizium |
| 2: | 58.156 | 22.73 | |
| 3: | 32.866 | 2.40 | Germanium |
| 4: | 24.732 | 4.08 | |
| 5: | 58.030 | 3.00 | Silizium |
| 6: | 91.603 | 2.49 | |
| 7: | unendlich | 1.00 | Germanium |
| 8: | unendlich | 2.30 | |
| 9: | unendlich | 1.00 | Saphir |
| 10: | unendlich | 1.50 | |
| 11: | unendlich | 34.90 | |
| 12: | unendlich | 0.10 | Silizium |
| 13: | unendlich | 0.00 | |
| Bild | unendlich | 0.00 | |
| ASPHÄREN-KONSTANTE:<br>K:-0.083265 | | | |

**16.** Objektiv nach Anspruch 1, gekennzeichnet durch die Linsendaten

Tabelle 3

| | Radius | Dicke bzw. Luftabstand | Material |
|---|---|---|---|
| Objekt: | unendlich | unendlich | |
| 1: | 38.595 | 6.50 | Silizium |
| 2: | 45.996 | 19.14 | |
| 3: | 32.468 | 2.40 | Germanium |
| 4: | 22.430 | 3.31 | |
| 5: | 35.465 | 4.00 | Zinkselenid |
| 6: | 87.485 | 3.10 | |
| 7: | unendlich | 1.00 | Germanium |
| 8: | unendlich | 2.50 | |
| 9: | unendlich | 1.00 | Saphir |
| 10: | unendlich | 1.50 | |
| 11: | unendlich | 34.90 | |
| 12: | unendlich | 0.10 | Silizium |
| 13: | unendlich | 0.00 | |
| Bild | unendlich | 0.00 | |
| ASPHÄREN-KONSTANTEN:<br>K:-0.053620<br>A:-.161285E-07 B:-.222806E-12 C: 0.000000E+00 D: 0.000000E+00 | | | |

**17.** Objektiv nach Anspruch 1, gekennzeichnet durch die Linsendaten

Tabelle 4

| | Radius | Dicke bzw. Luftabstand | Material |
|---|---|---|---|
| Objekt: | unendlich | unendlich | |
| 1: | 52.243 | 9.00 | Silizium |
| 2: | 80.920 | 15.30 | |
| 3: | 35.787 | 3.00 | Germanium |
| 4: | 24.861 | 11.45 | |
| 5: | -40.664 | 3.80 | Germanium |
| 6: | -50.728 | 2.56 | |
| 7: | 724.569 | 3.90 | Siilizium |
| 8: | -117.672 | 4.00 | |
| 9: | unendlich | 1.00 | Germanium |
| 10: | unendlich | 1.00 | |
| 11: | unendlich | 1.00 | Saphir |
| 12: | unendlich | 1.00 | |
| 13: | unendlich | 35.00 | |
| Bild | unendlich | 0.00 | |
| ASPHÄREN-KONSTANTE:<br>K:-0.186374 | | | |

FIG.1

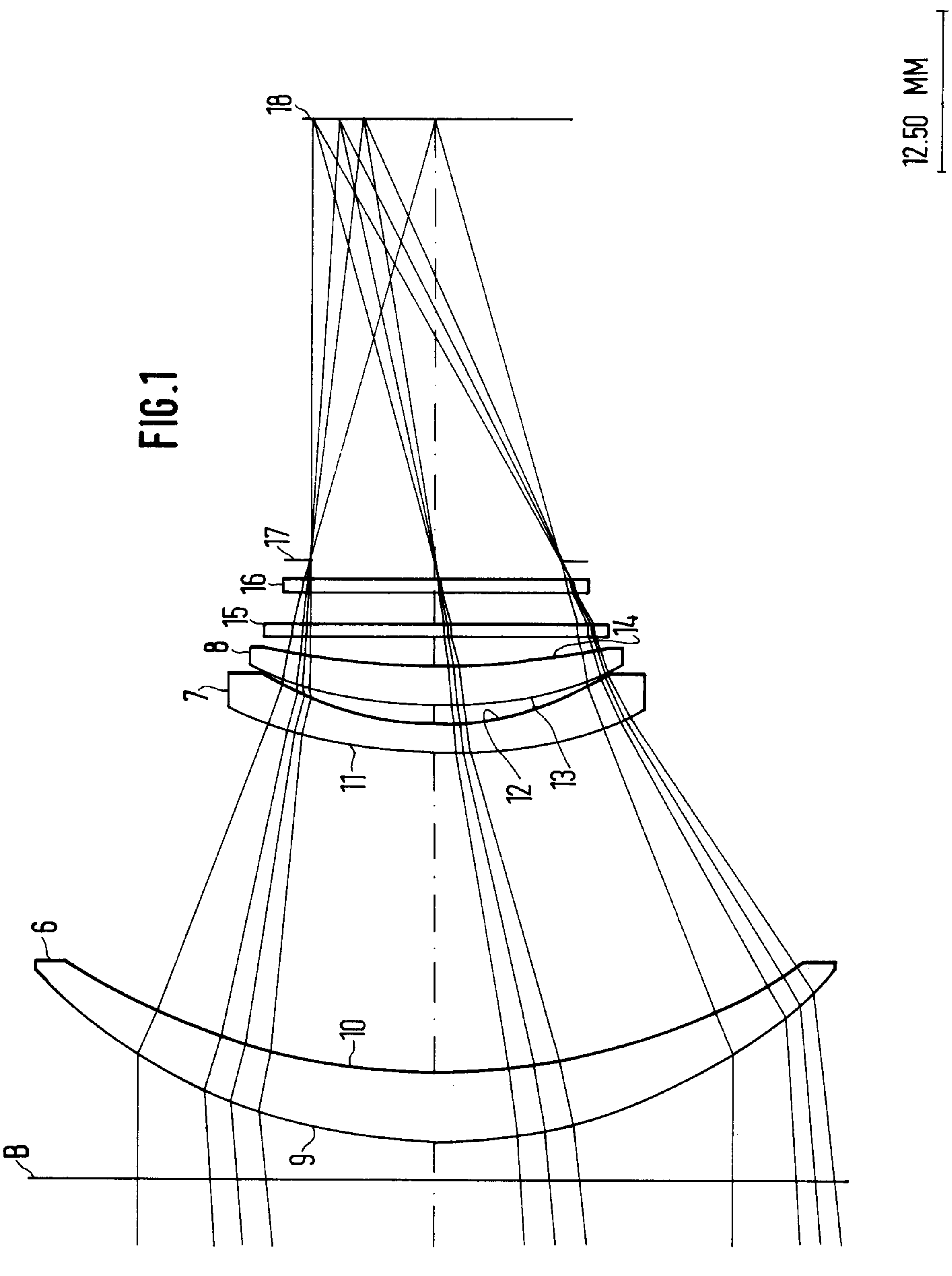

FIG.2

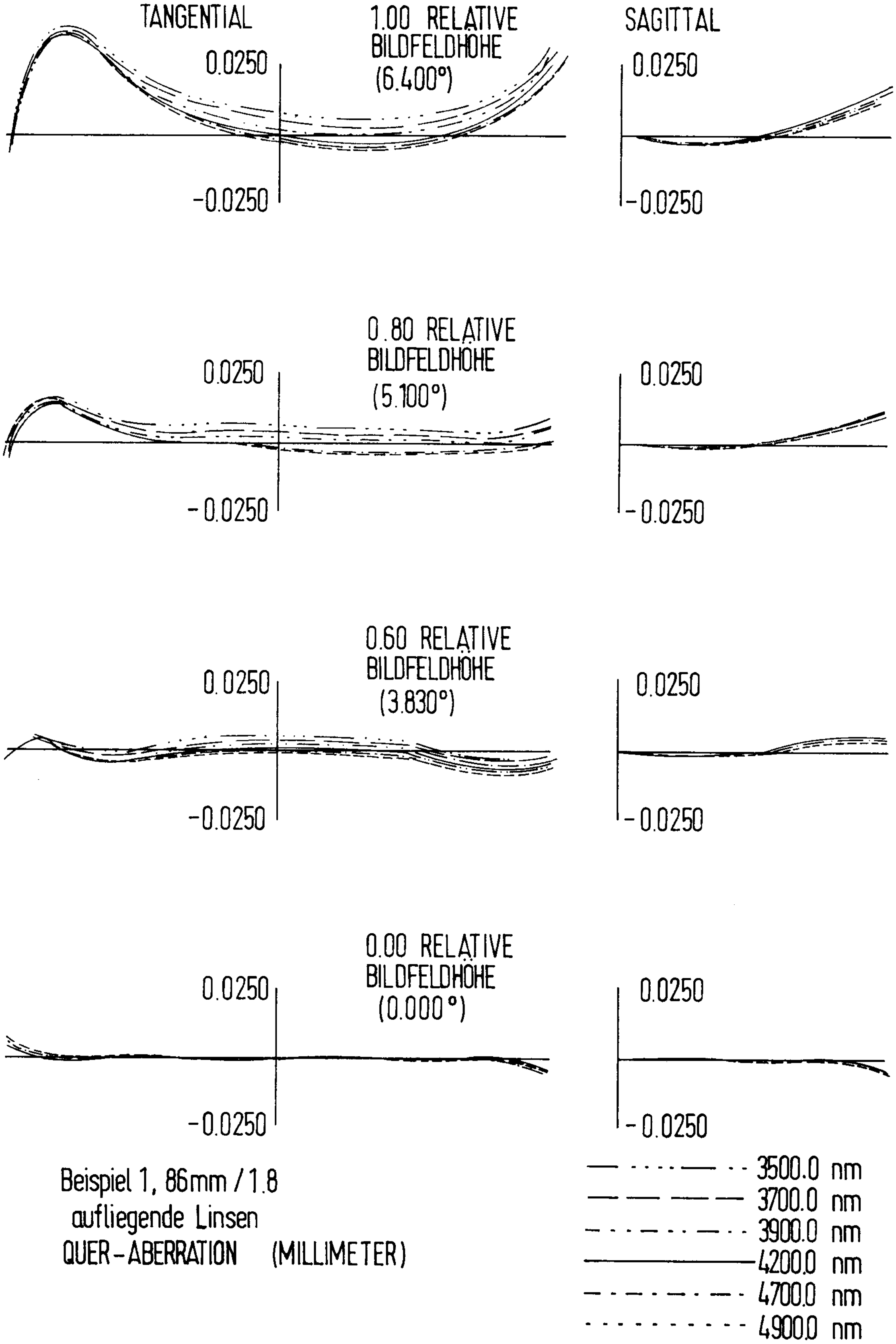
TANGENTIAL
SAGITTAL
1.00 RELATIVE BILDFELDHÖHE (6.400°)
0.80 RELATIVE BILDFELDHÖHE (5.100°)
0.60 RELATIVE BILDFELDHÖHE (3.830°)
0.00 RELATIVE BILDFELDHÖHE (0.000°)
0.0250
-0.0250
Beispiel 1, 86mm / 1.8
aufliegende Linsen
QUER-ABERRATION (MILLIMETER)
3500.0 nm
3700.0 nm
3900.0 nm
4200.0 nm
4700.0 nm
4900.0 nm

FIG.3

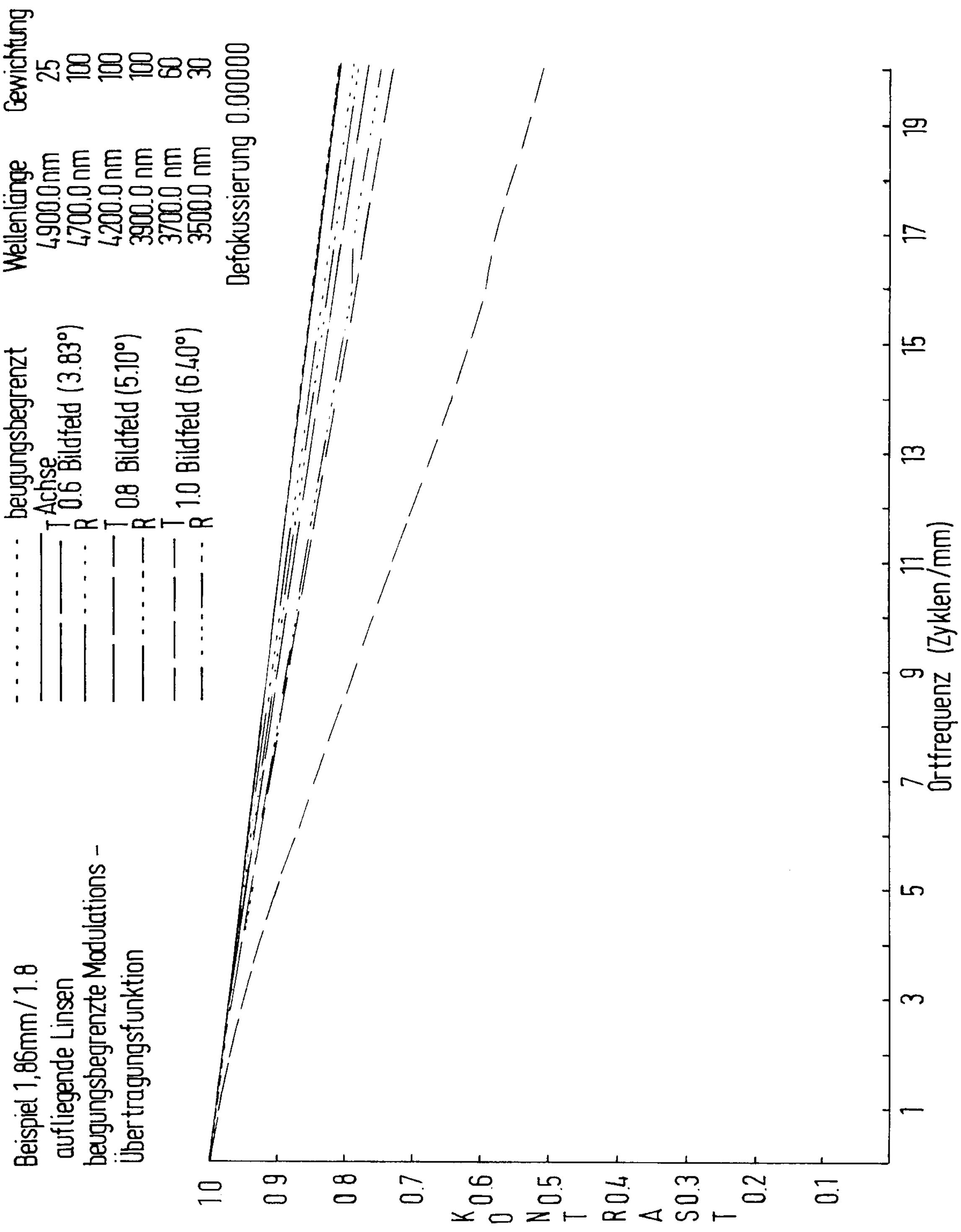
Beispiel 1,86mm / 1.8
aufliegende Linsen
beugungsbegrenzte Modulations -
Übertragungsfunktion
beugungsbegrenzt
Achse
T 0.6 Bildfeld (3.83°)
R
T 0.8 Bildfeld (5.10°)
R
T 1.0 Bildfeld (6.40°)
R
Wellenlänge
4900.0 nm
4700.0 nm
4200.0 nm
3900.0 nm
3700.0 nm
3500.0 nm
Gewichtung
25
100
100
100
60
30
Defokussierung 0.00000
KONTRAST
1.0
0.9
0.8
0.7
0.6
0.5
0.4
0.3
0.2
0.1
1
3
5
7
9
11
13
15
17
19
Ortfrequenz (Zyklen/mm)

FIG.4

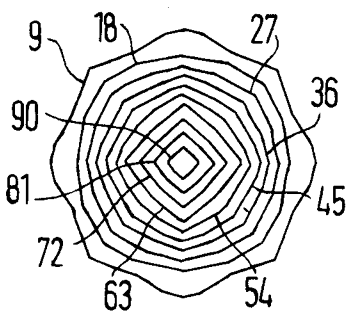


0.008906mm

Beispiel 1, 86mm/1.8
aufliegende Linsen
beugungsbegrenzte Bildpunktfunktion

| Wellenlänge | Gewichtung |
|---|---|
| 4900.0 nm | 25 |
| 4700.0 nm | 100 |
| 4200.0 nm | 100 |
| 3900.0 nm | 100 |
| 3700.0 nm | 60 |
| 3500.0 nm | 30 |

Feld (0.00,0.00)MAX,(0.0,0.0)DEG
Defokussierung 0.000000 mm
Linienabstand: 9%

FIG.5

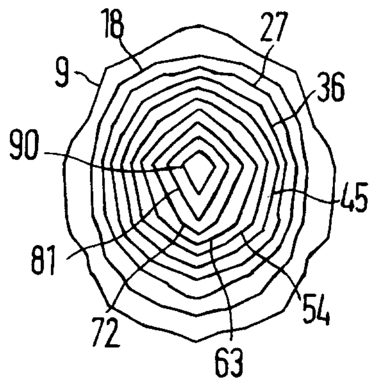


0.008906mm

Beispiel 1, 86 mm/1.8
aufliegende Linsen
beugungsbegrenzte Bildpunktfunktion

| Wellenlänge | Gewichtung |
|---|---|
| 4900.0 nm | 25 |
| 4700.0 nm | 100 |
| 4200.0 nm | 100 |
| 3900.0 nm | 100 |
| 3700.0 nm | 60 |
| 3500.0 nm | 30 |

Feld (0.00,0.60)MAX,(0.0,3.8) DEG
Defokussierung 0.000000 mm
Linienabstand: 9%

FIG. 6

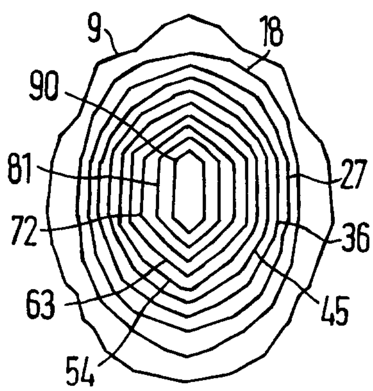


0.008906 mm

Beispiel 1, 86mm/1.8
aufliegende Linsen
beugungsbegrenzte Bildpunktfunktion

| Wellenlänge | Gewichtung |
|---|---|
| 4900.0 nm | 25 |
| 4700.0 nm | 100 |
| 4200.0 nm | 100 |
| 3900.0 nm | 100 |
| 3700.0 nm | 60 |
| 3500.0 nm | 30 |

Feld (0.0, 0.8)MAX,(0.0,5.1)DEG
Defokussierung 0.000000 mm
Linienabstand: 9%

FIG. 7

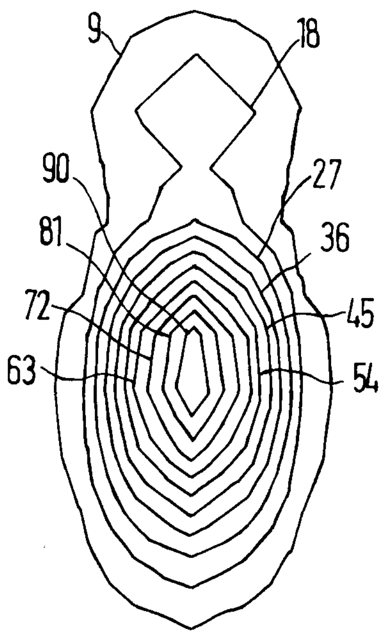


0.008906mm

Beispiel 1, 86mm/1.8
aufliegende Linsen
beugungsbegrenzte Bildpunktfunktion

| Wellenlänge | Gewichtung |
|---|---|
| 4900.0 nm | 25 |
| 4700.0 nm | 100 |
| 4200.0 nm | 100 |
| 3900.0 nm | 100 |
| 3700.0 nm | 60 |
| 3500.0 nm | 30 |

Feld (0.00, 1.00) MAX, (0.0, 6.4) DEG
Defokussierung 0.000000 mm
Linienabstand : 9%

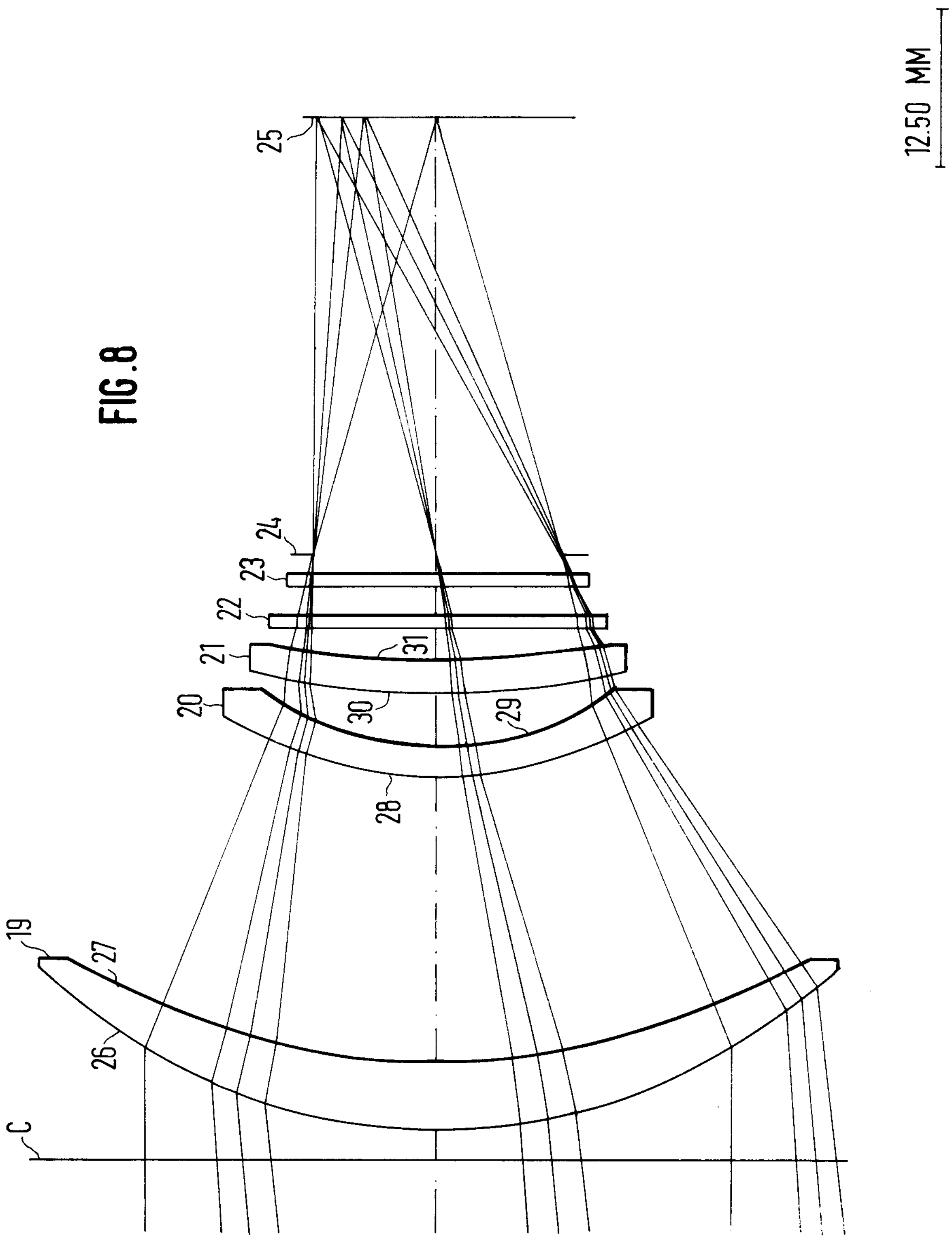


FIG.8

FIG.9

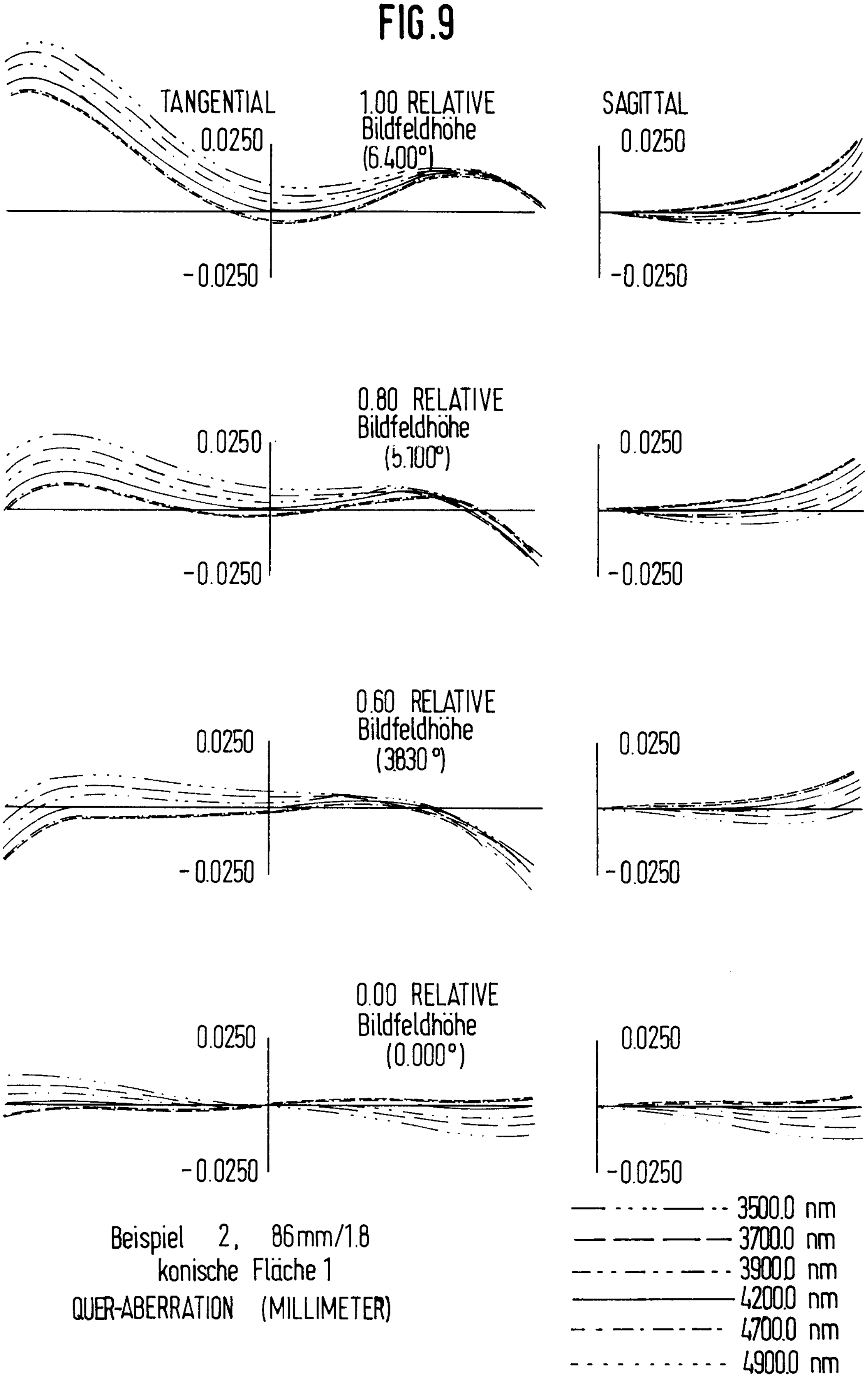
TANGENTIAL
1.00 RELATIVE
Bildfeldhöhe
(6.400°)
SAGITTAL
0.0250
-0.0250
0.80 RELATIVE
Bildfeldhöhe
(5.100°)
0.60 RELATIVE
Bildfeldhöhe
(3.830°)
0.00 RELATIVE
Bildfeldhöhe
(0.000°)
3500.0 nm
3700.0 nm
3900.0 nm
4200.0 nm
4700.0 nm
4900.0 nm
Beispiel 2, 86mm/1.8
konische Fläche 1
QUER-ABERRATION (MILLIMETER)

FIG.10

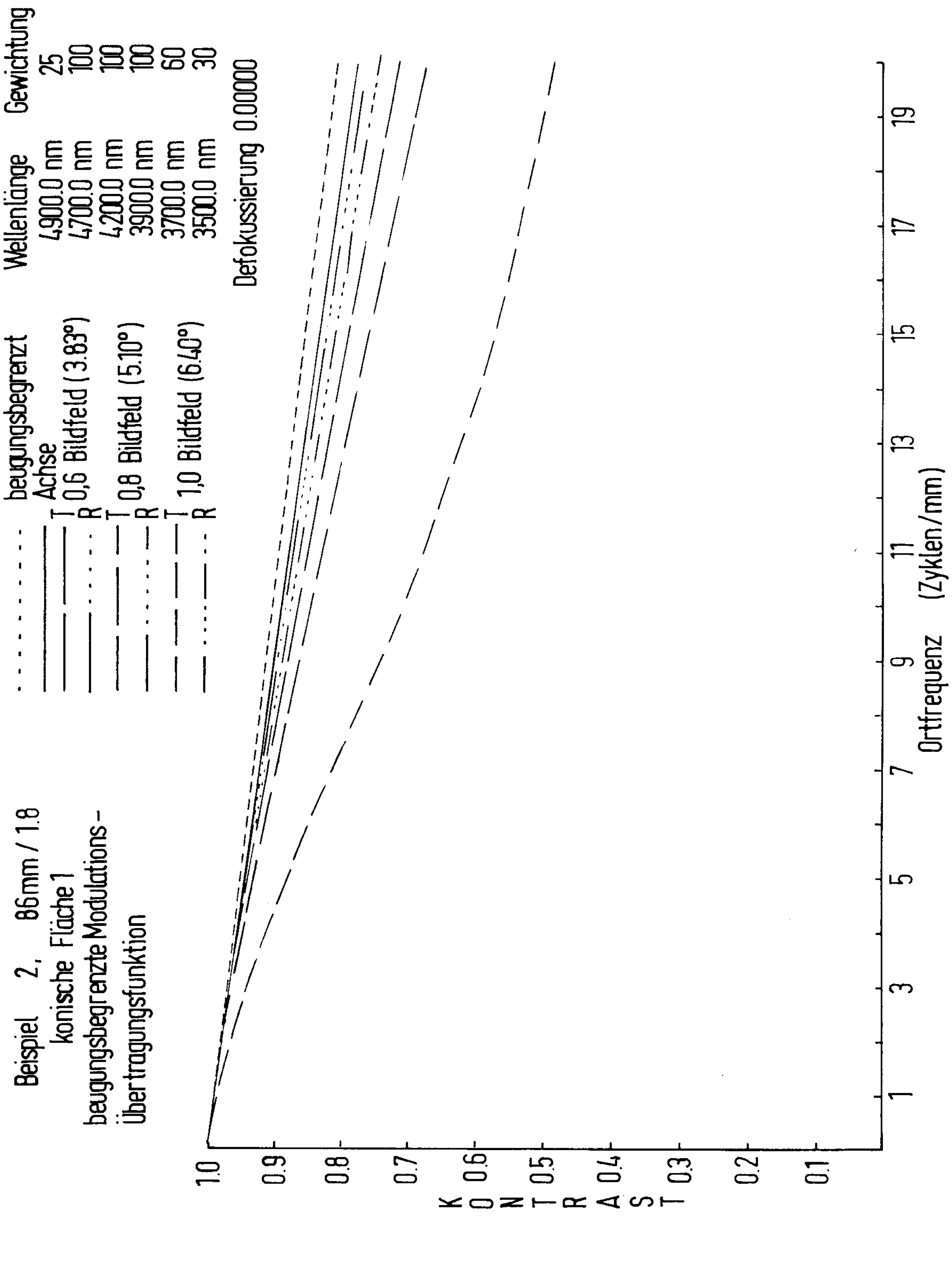
Beispiel 2, 86mm / 1.8
konische Fläche 1
beugungsbegrenzte Modulations-
übertragungsfunktion
beugungsbegrenzt
Achse
T 0,6 Bildfeld (3.83°)
R
T 0,8 Bildfeld (5.10°)
R
T 1,0 Bildfeld (6.40°)
R
Wellenlänge
4900.0 nm
4700.0 nm
4200.0 nm
3900.0 nm
3700.0 nm
3500.0 nm
Gewichtung
25
100
100
100
60
30
Defokussierung 0.00000
KONTRAST
1.0
0.9
0.8
0.7
0.6
0.5
0.4
0.3
0.2
0.1
1
3
5
7
9
11
13
15
17
19
Ortfrequenz (Zyklen/mm)

FIG.11

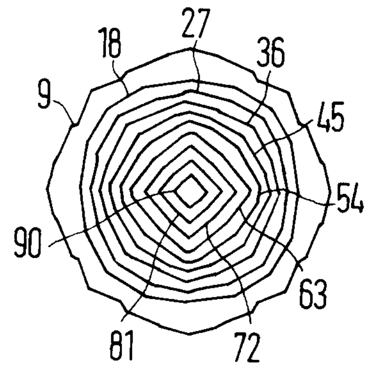


0.008906mm

Beispiel 2, 86mm/1.8
konische Fläche1
beugungsbegrenzte Bildpunktfunktion

| Wellenlänge | Gewichtung |
|---|---|
| 4900.0nm | 25 |
| 4700.0nm | 100 |
| 4200.0nm | 100 |
| 3900.0nm | 100 |
| 3700.0nm | 60 |
| 3500.0nm | 30 |

Feld(0.00,0.00)MAX,(0.0,0.0)DEG
Defokussierung 0.000000 mm
Linienabstand:9%

FIG.12

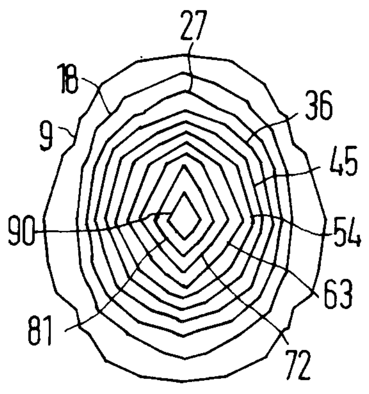


0.008906mm

Beispiel 2, 86mm/1.8
konische Fläche 1
beugungsbegrenzte Bildpunktfunktion

| Wellenlänge | Gewichtung |
|---|---|
| 4900.0 nm | 25 |
| 4700.0 nm | 100 |
| 4200.0 nm | 100 |
| 3900.0 nm | 100 |
| 3700.0 nm | 60 |
| 3500.0 nm | 30 |

Feld (0.00, 0.60) MAX, (0.00, 3.8) DEG
Defokussierung 0.000000 mm
Linienabstand: 9%

FIG.13

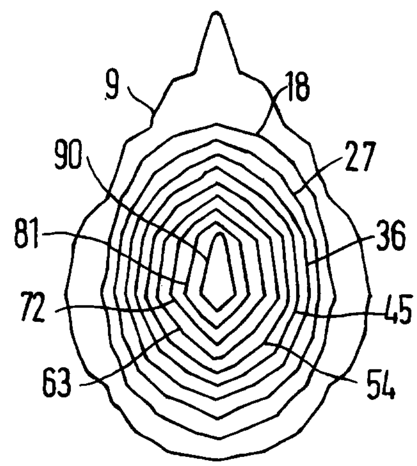


0.008906mm

Beispiel 2, 86mm/1.8
konische Fläche 1
beugungsbegrenzte Bildpunktfunktion

| Wellenlänge | Gewichtung |
|---|---|
| 4900.0 nm | 25 |
| 4700.0 nm | 100 |
| 4200.0 nm | 100 |
| 3900.0 nm | 100 |
| 3700.0 nm | 60 |
| 3500.0 nm | 30 |

Feld(0.00,0.80)MAX,(0.0,5.1)DEG
Defokussierung 0.000000 mm
Linienabstand :9%

FIG.14

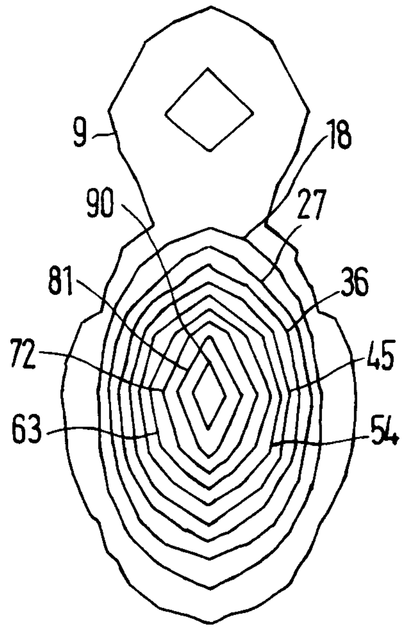


0.008906mm

Beispiel 2, 86mm/1.8
konische Fläche 1
beugungsbegrenzte Bildpunktfunktion

| Wellenlänge | Gewichtung |
|---|---|
| 4900.0nm | 25 |
| 4700.0nm | 100 |
| 4200.0nm | 100 |
| 3900.0nm | 100 |
| 3700.0nm | 60 |
| 3500.0nm | 30 |

Feld(0.00,1.00)MAX,(0.0,6.4)DEG
Defokussierung 0.000000 mm
Linienabstand: 9%

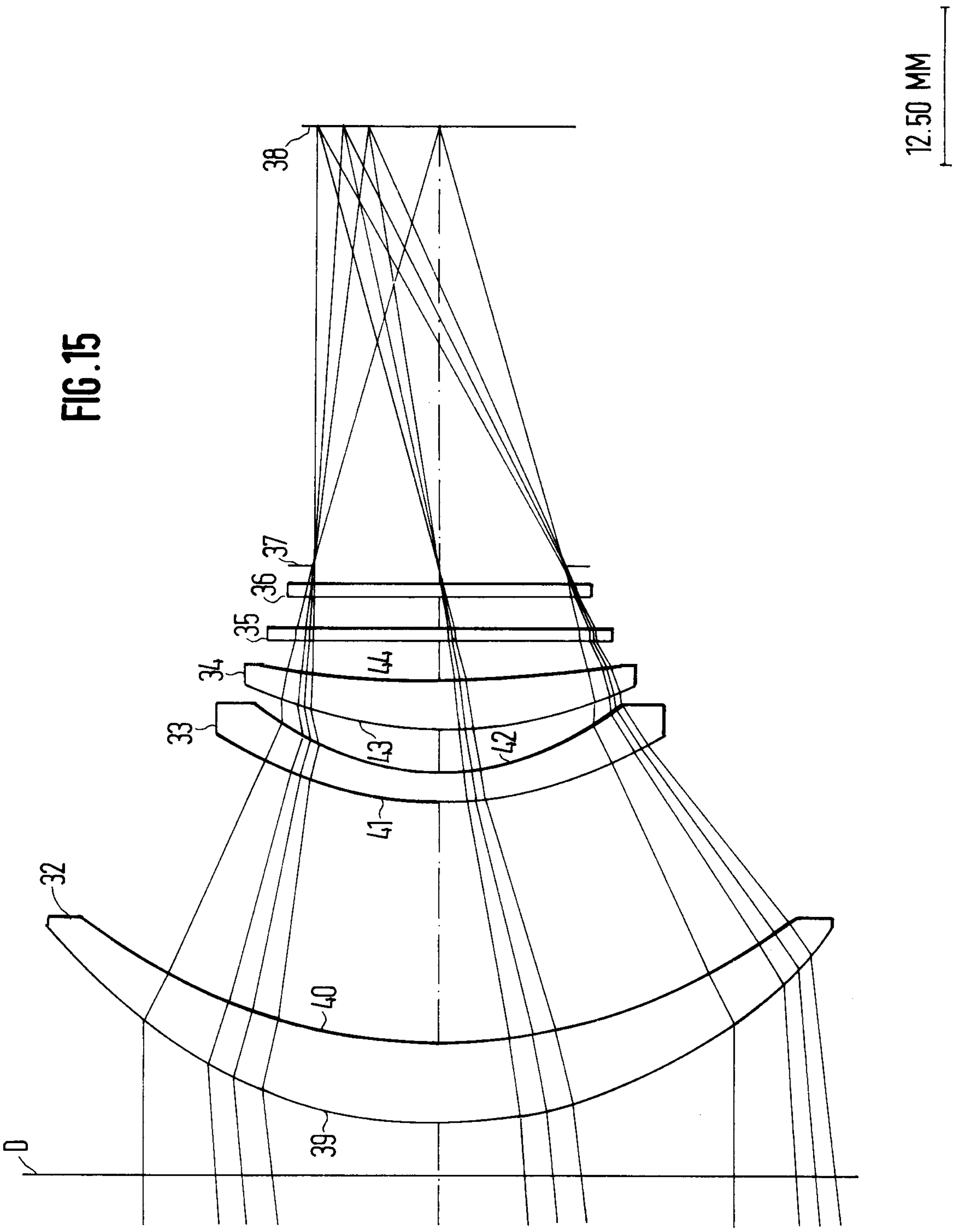


FIG.15

# FIG.16

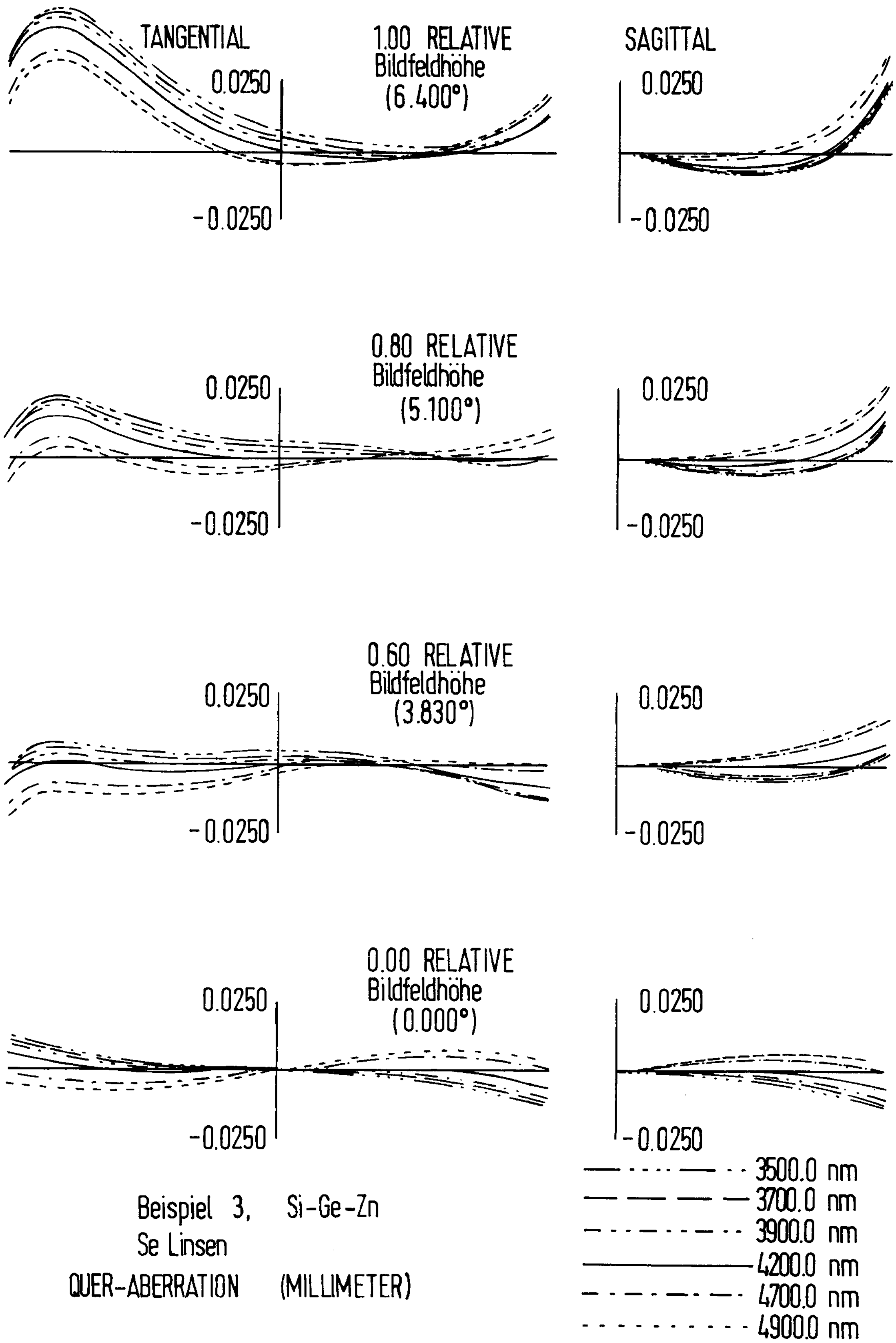


Beispiel 3, Si-Ge-Zn
Se Linsen
QUER-ABERRATION (MILLIMETER)

FIG.17

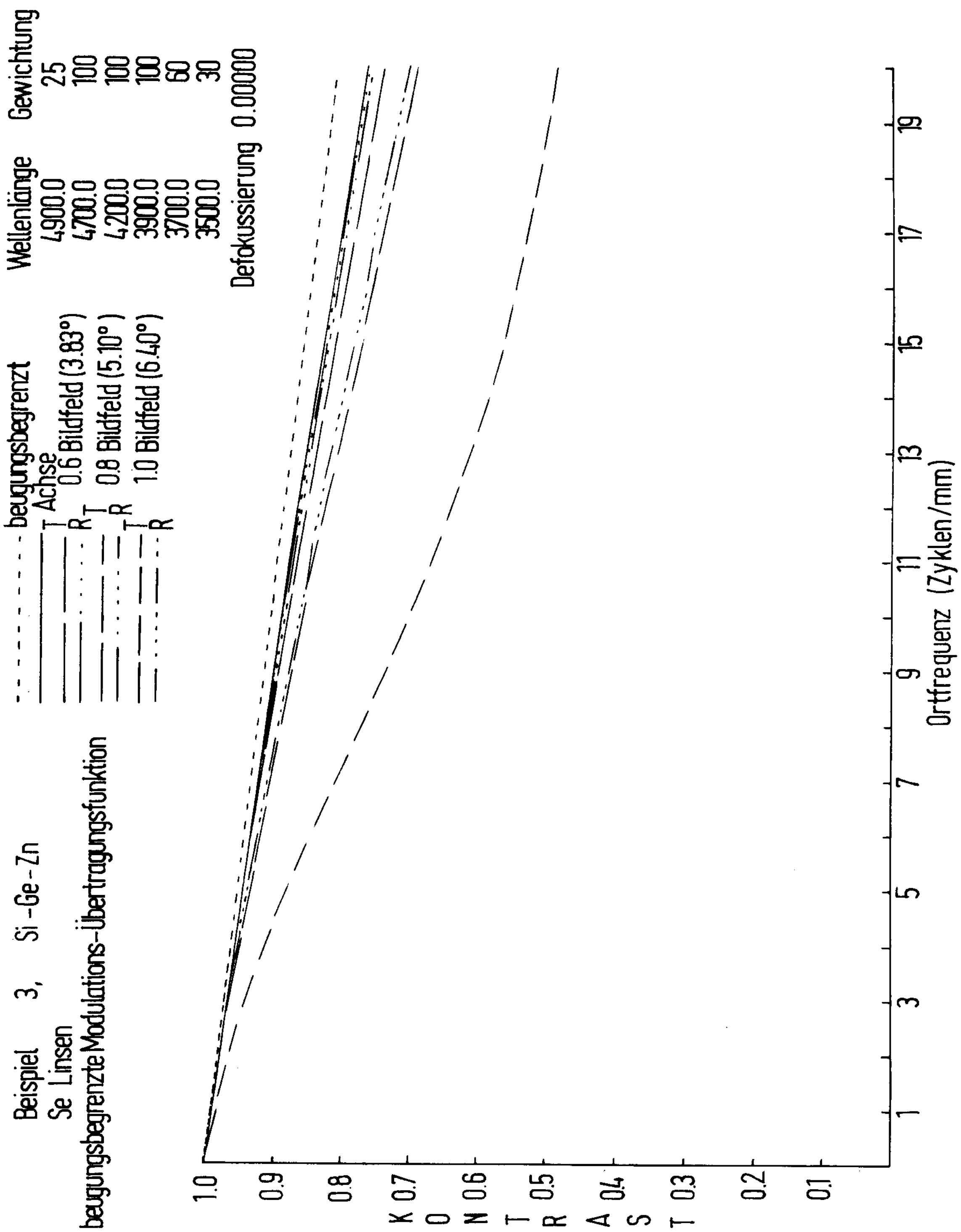
Beispiel 3, Si-Ge-Zn
Se Linsen
beugungsbegrenzte Modulations-Übertragungsfunktion
beugungsbegrenzt
T Achse
R
T 0.6 Bildfeld (3.83°)
R
T 0.8 Bildfeld (5.10°)
R
T 1.0 Bildfeld (6.40°)
R
Wellenlänge
4900.0
4700.0
4200.0
3900.0
3700.0
3500.0
Gewichtung
25
100
100
100
60
30
Defokussierung 0.00000
KONTRAST
1.0
0.9
0.8
0.7
0.6
0.5
0.4
0.3
0.2
0.1
1
3
5
7
9
11
13
15
17
19
Ortfrequenz (Zyklen/mm)

FIG.18

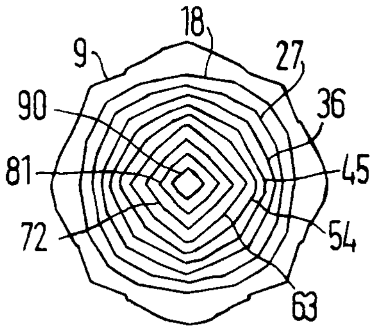


0.008906mm

Beispiel 3, Si-Ge-Zn
Se Linsen

beugungsbegrenzte Bildpunktfunktion

| Wellenlänge | Gewichtung |
|---|---|
| 4900.0 nm | 25 |
| 4700.0 nm | 100 |
| 4200.0 nm | 100 |
| 3900.0 nm | 100 |
| 3700.0 nm | 60 |
| 3500.0 nm | 30 |

Feld (0.00, 0.00)MAX,(0.0, 0.0) DEG
Defokussierung 0.000000 mm
Linienabstand: 9%

FIG.19

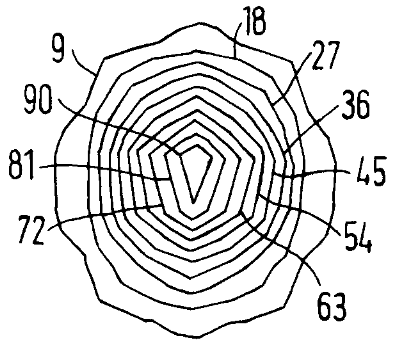


0.008906mm

Beispiel 3, Si-Ge-Zn
Se Linsen
beugungsbegrenzte Bildpunktfunktion

| Wellenlänge | Gewichtung |
|---|---|
| 4900.0 nm | 25 |
| 4700.0 nm | 100 |
| 4200.0 nm | 100 |
| 3900.0 nm | 100 |
| 3700.0 nm | 60 |
| 3500.0 nm | 30 |

Feld (0.00 , 0.60)MAX, (0.0,3.8)DEG
Defokussierung 0.000000 mm
Linienabstand: 9%

FIG.20

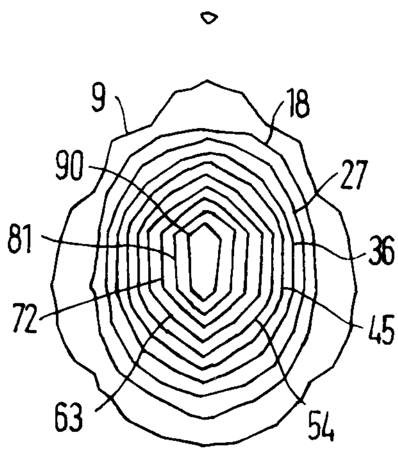


0.008906mm

Beispiel 3, Si-Ge-Zn
Se Linsen

beugungsbegrenzte Bildpunktfunktion

| Wellenlänge | Gewichtung |
|---|---|
| 4900.0 nm | 25 |
| 4700.0 nm | 100 |
| 4200.0 nm | 100 |
| 3900.0 nm | 100 |
| 3700.0 nm | 60 |
| 3500.0 nm | 30 |

Feld (0.00,0.80)MAX,(0.0,5.1) DEG
Defokussierung 0.000000mm
Linienabstand: 9%

FIG.21

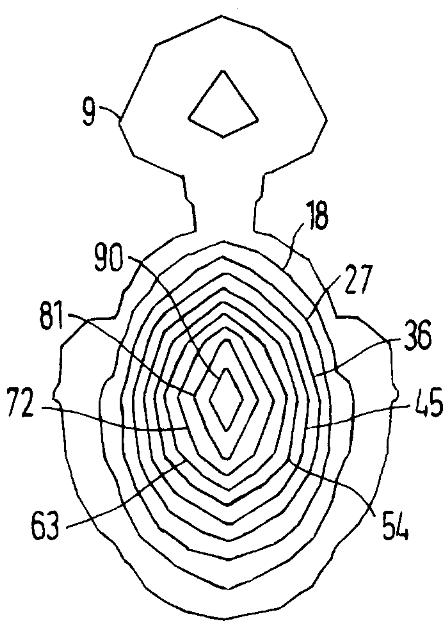


0.008906mm

Beispiel 3 , Si - Ge - Zn
Se Linsen
beugungsbegrenzte Bildpunktfunktion

| Wellenlänge | Gewichtung |
|---|---|
| 4900.0 nm | 25 |
| 4700.0 nm | 100 |
| 4200.0 nm | 100 |
| 3900.0 nm | 100 |
| 3700.0 nm | 60 |
| 3500.0 nm | 30 |

Feld (0.00,1.00) MAX, (0.0,6.4) DEG
Defokussierung 0.000000 mm
Linienabstand : 9%

FIG.22

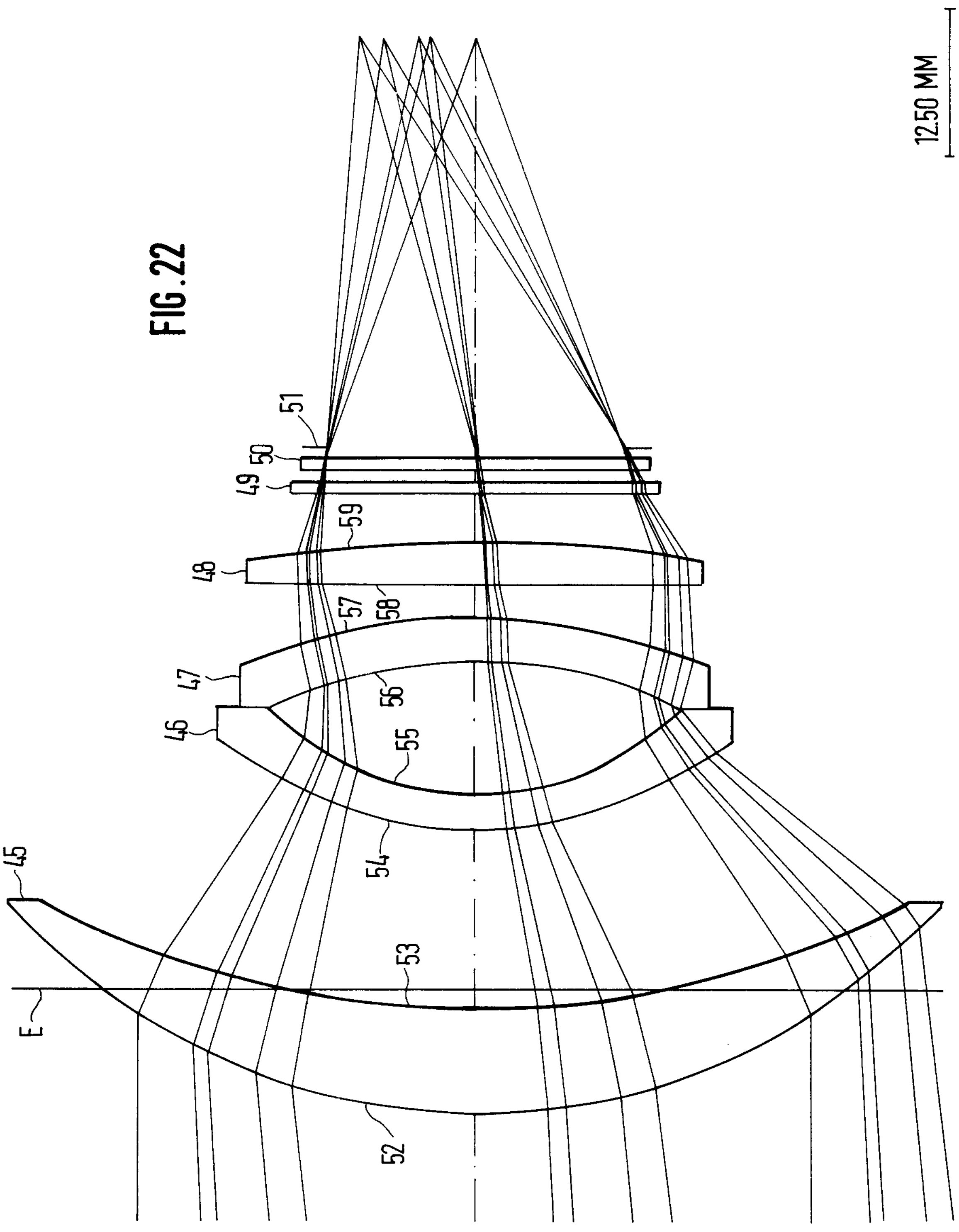

FIG. 23

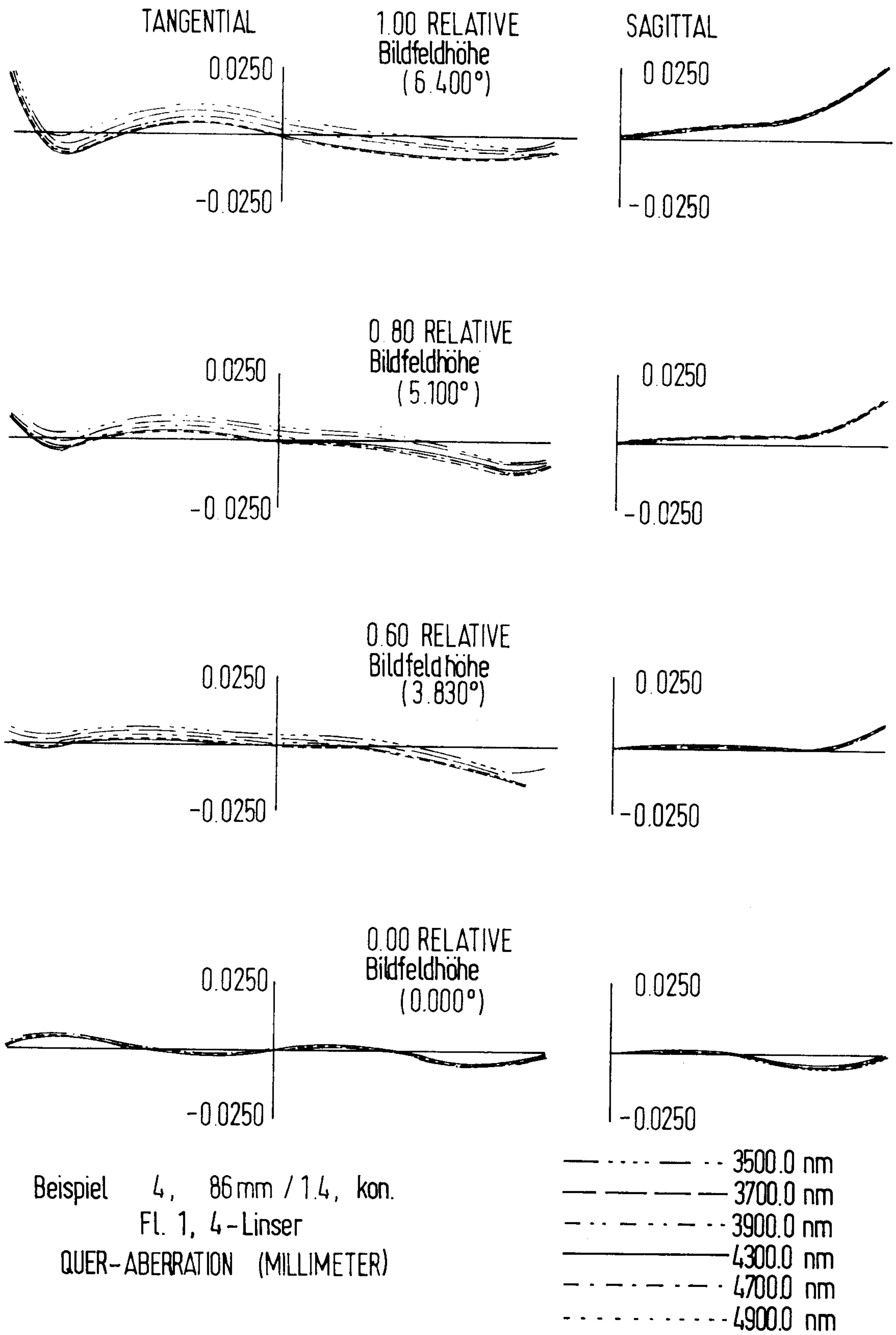


Beispiel 4, 86 mm / 1.4, kon.
Fl. 1, 4-Linser
QUER-ABERRATION (MILLIMETER)

FIG.24

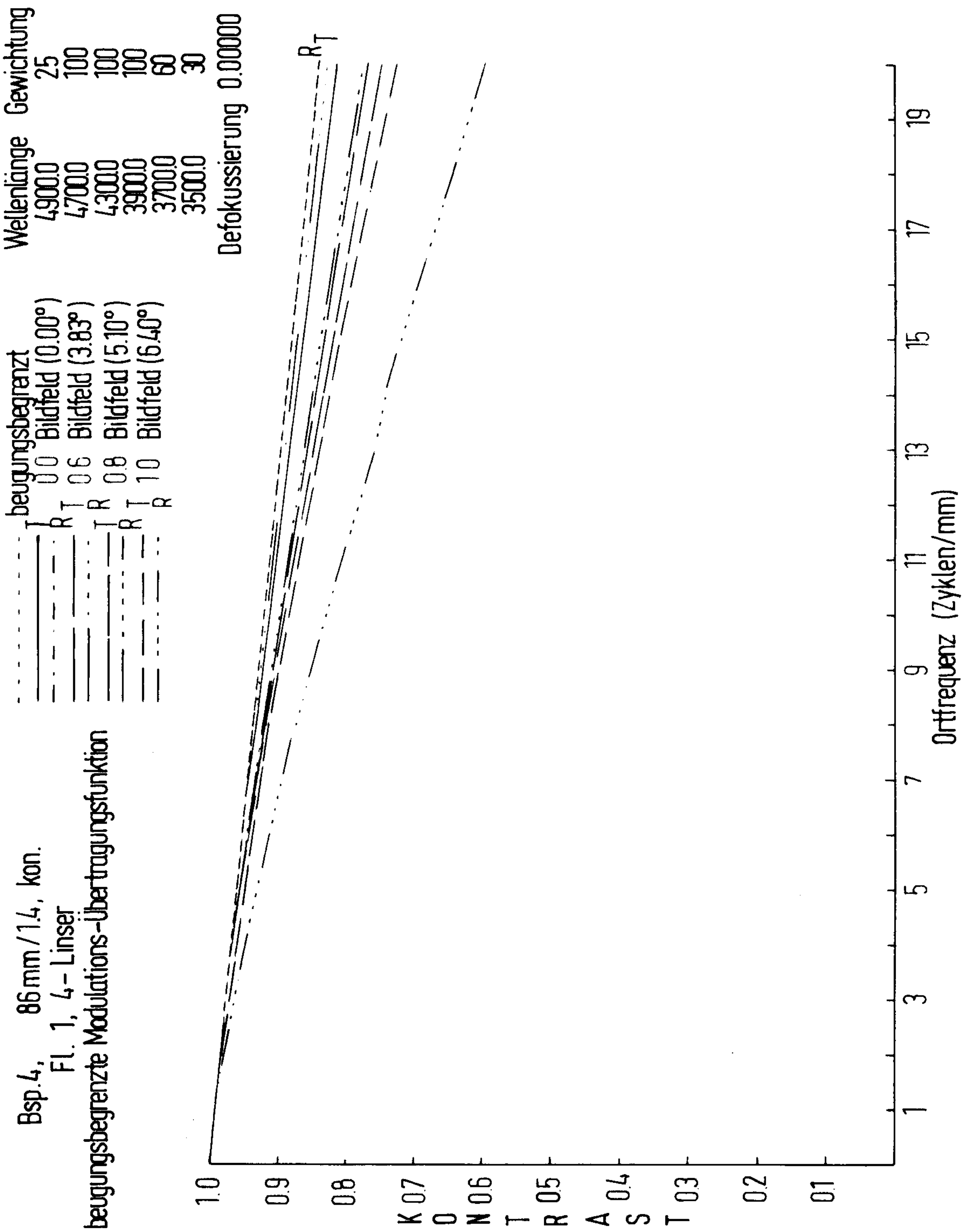
Bsp.4, 86mm/1.4, kon.
Fl. 1, 4-Linser
beugungsbegrenzte Modulations-Übertragungsfunktion
beugungsbegrenzt
T R 0.0 Bildfeld (0.00°)
R T 0.6 Bildfeld (3.83°)
T R 0.8 Bildfeld (5.10°)
R T 1.0 Bildfeld (6.40°)
Wellenlänge Gewichtung
4900.0 25
4700.0 100
4300.0 100
3900.0 100
3700.0 60
3500.0 30
Defokussierung 0.00000
KONTRAST
1.0
0.9
0.8
0.7
0.6
0.5
0.4
0.3
0.2
0.1
1
3
5
7
9
11
13
15
17
19
Ortfrequenz (Zyklen/mm)

FIG.25

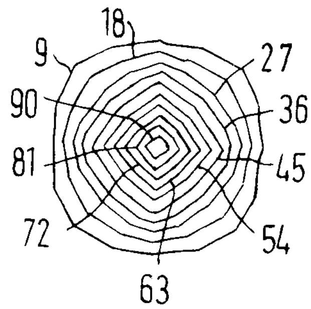


0.008906mm

Bsp.4, 86mm/14, kon.
Fl. 1, 4-Linser
beugungsbegrenzte Bildpunktfunktion

| Wellenlänge | Gewichtung |
|---|---|
| 4900.0 nm | 25 |
| 4700.0 nm | 100 |
| 4300.0 nm | 100 |
| 3900.0 nm | 100 |
| 3700.0 nm | 60 |
| 3500.0 nm | 30 |

Feld (0.00,0.00)MAX,(0.0, 0.0)DEG
Defokussierung 0.000000 mm
Linienabstand: 9 %

FIG. 26

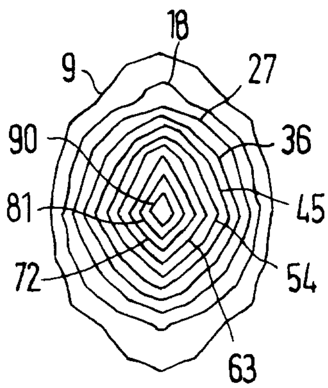


0.008906mm

Bsp. 4, 86 mm/1.4, kon.
Fl. 1, 4 - Linser
beugungsbegrenzte Bildpunktfunktion

| Wellenlänge | Gewichtung |
|---|---|
| 4900.0 nm | 25 |
| 4700.0 nm | 100 |
| 4300.0 nm | 100 |
| 3900.0 nm | 100 |
| 3700.0 nm | 60 |
| 3500.0 nm | 30 |

Feld (0.00, 0.60) MAX, (0.0, 3.8) DEG
Defokussierung 0.000000 mm
Linienabstand : 9%

FIG.27

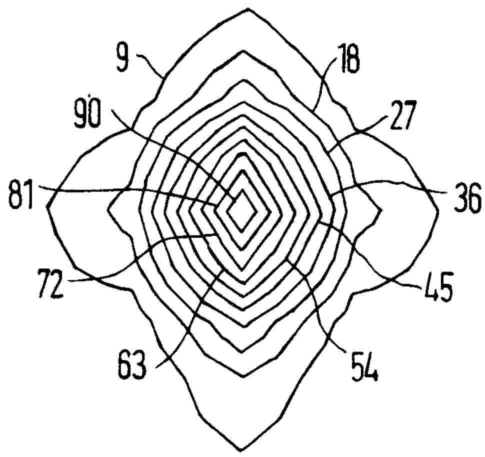


0.008906mm

Bsp.4, 86 mm/1.4, kon.
Fl. 1, 4-Linser

beugungsbegrenzte Bildpunktfunktion

| Wellenlänge | Gewichtung |
|---|---|
| 4900.0 nm | 25 |
| 4700.0 nm | 100 |
| 4300.0 nm | 100 |
| 3900.0 nm | 100 |
| 3700.0 nm | 60 |
| 3500.0 nm | 30 |

Feld (0.00,0.80)MAX,(0.0,5.1)DEG
Defokussierung 0.000000 mm
Linienabstand: 9%

FIG. 28

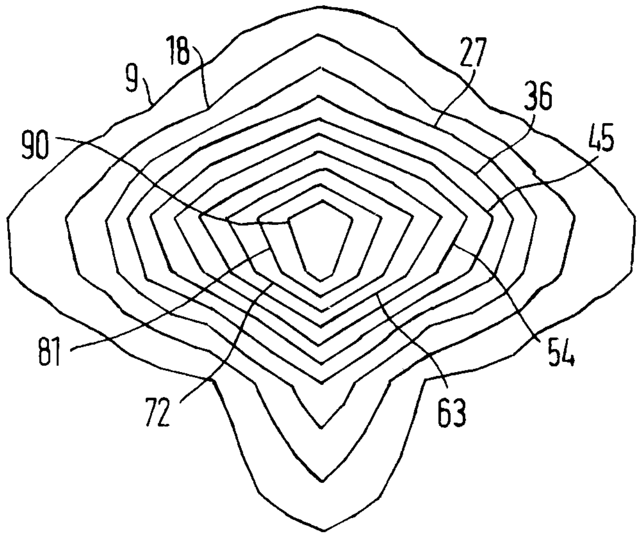


0.008906mm

Beispiel 4, 86mm/1.4 kon.
Fl.1, 4-Linser
beugungsbegrenzte Bildpunktfunktion

| Wellenlänge | Gewichtung |
|---|---|
| 4900.0 nm | 25 |
| 4700.0 nm | 100 |
| 4300.0 nm | 100 |
| 3900.0 nm | 100 |
| 3700.0 nm | 60 |
| 3500.0 nm | 30 |

Feld (0.00,1.00) MAX,(0.0,6.4) DEG
Defokussierung 0.000000mm
Linienabstand: 9%

FIG.29